(19) Europäisches Patentamt
European Patent Office
Office européen des brevets

(11) EP 0 540 951 B1

(12) **EUROPEAN PATENT SPECIFICATION**

(45) Date of publication and mention
of the grant of the patent:
**28.08.1996 Bulletin 1996/35**

(51) Int Cl.⁶: **G21D 3/16**, G21C 7/08

(21) Application number: **92118126.9**

(22) Date of filing: **22.10.1992**

(54) **Method and apparatus for controlling a nuclear reactor to minimize boron concentration adjustment during load follow operation**

Verfahren und Einrichtung zur Regelung eines Kernreaktors im Sinne einer Minimierung der Borkonzentrationseinstellung im Lastfolgebetrieb

Procédé et dispositif de pilotage d'un réacteur nucléaire visant à réduire les variations de concentration de bore pendant le fonctionnement en suivi de charge

(84) Designated Contracting States:
**BE ES FR GB SE**

(30) Priority: **08.11.1991 US 790299**

(43) Date of publication of application:
**12.05.1993 Bulletin 1993/19**

(73) Proprietor: **WESTINGHOUSE ELECTRIC CORPORATION
Pittsburgh Pennsylvania 15222 (US)**

(72) Inventor: **Morita, Toshio
Pittsburgh, Pennsylvania 15221-5002 (US)**

(74) Representative:
**Gallo, Wolfgang, Dipl.-Ing. (FH) et al
Patentanwälte Dipl.-Ing. L. Fleuchaus,
Dipl.-Phys. H. Schroeter,
Dipl.-Ing K. Lehmann,
Dipl.-Ing.W. Wehser,
Dipl.-Ing.(FH) W. Gallo,
Ludwigstrasse 26
86152 Augsburg (DE)**

(56) References cited:
EP-A- 0 369 865       FR-A- 2 244 235
FR-A- 2 283 515       FR-A- 2 305 826
FR-A- 2 395 572

• DATABASE WPIL Week 8817, Derwent
Publications Ltd., London, GB; AN 88-116 737 &
JP-A-63 063 997

**Description**

The present invention is directed to operation of a nuclear reactor during changes in load, more particularly, to maintaining substantially constant axial distribution of power using control rod manipulation during load changes.

When a nuclear reactor has been operating at full power for at least two or three days, the axial, i.e., top-to-bottom, distribution of xenon is substantially uniform through the middle two-thirds of the reactor core, with significant drop off at the top and bottom. Xenon is a strong neutron absorber and thus uneven axial distribution of xenon tends to cause uneven axial power distribution. The rate of destruction of xenon in a region of core is proportional to the power produced in that region of core. On the other hand, the production of xenon depends upon the quantity of radioactive iodine. Since the quantity of radioactive iodine in a region of core is proportional to the power in that region at a previous point in time, there is a time lag in the relationship of power to the creation and destruction of xenon in a region of core. When the power or reactivity of a region of core has been constant for over one day, the creation and destruction rates of xenon in that region of core will be close to equilibrium.

Typically, most changes in power level of a nuclear reactor are accomplished by inserting control rods into the top of the reactor core. As a result, the reactivity is reduced more in the upper region of core than in the lower region of core, with the amount of core affected depending upon the strength or neutron absorption worth of the control rods and the depth of insertion. This causes a relatively quick rise in xenon concentration and a decrease in the reactive iodine concentration in the upper region of core where the reactivity has been reduced. Since xenon is a strong neutron absorber, the control rods may be removed if the reactor is to maintain, e.g., one-half power, for several hours. As the xenon decays, reactivity will increase in the core, unless the control rods are reinserted. If the power level of the reactor is constantly undergoing change, up and down, before the production and destruction of xenon reaches equilibrium, there is a tendency for the highest xenon concentrations to fluctuate between the upper and lower regions of the core. When the control rods are inserted in the upper region of core, more radioactive iodine is formed in the lower region of core than the upper region of core at the same time that the xenon concentration is higher in the upper region of core than the lower region of core. When the control rods are removed, the destruction of xenon in the upper region of core increases at a faster rate than it is replaced, due to the low concentration of iodine. Meanwhile, the concentration of xenon in the lower region of core is maintained relatively steady, since the rate of radioactive iodine formation and xenon destruction in the lower region of core is only affected when the control rods are inserted more than one-half way into the core. This fluctuation in the difference between xenon concentrations in the upper and lower regions of core causes the axial power distribution to be alternatively skewed towards the top or the bottom of the core, depending upon whether the xenon concentration is higher in the lower or the upper regions of the core, respectively.

Conventionally, changes are made to the boron concentration in the coolant to adjust reactivity uniformly throughout the reactor core, thus minimizing uneven distribution of xenon. However, use of boron concentration adjustment leads to disposal problems which can be avoided if a reactor is operated with minimum use of boron concentration adjustment. Early attempts at load follow operation modified conventional control rod operation, but still required adjustments to boron concentration in some situations. For example, the inventor of the present invention was issued U.S. Patent No. 4,057,463 which discloses methods using full length rods and boron concentration adjustment and using full and part length rods with boron concentration adjustment. In the first method, the full length control rods are inserted in such a manner that proper axial power distribution is maintained and the boron concentration is adjusted to maintain the required reactivity. In the second method, at full power the part length control rods are positioned near the center of core and as power is reduced by the insertion of full length control rods in the upper region of core to reduce reactivity, the part length control rods are moved to the lower region of core to maintain the axial offset. Using the second method of operation, rapid change of the power level can be easily achieved while maintaining the axial offset at a constant value. However, power level changes cause xenon transients which require adjustment in boron concentration to maintain criticality.

In the past, "axial offset" has been used to characterize the axial power distribution for the purpose of maintaining proper axial power distribution. The methods described in U.S. Patent No. 4,057,463 provide examples of the usefulness of axial offset for this purpose. However, under certain circumstances, particularly when part length control rods are used, the axial power distribution may become "pinched," that is the peak power level may be significantly higher than the average power level. If the power is near the center of core, the axial offset will be acceptable, despite an excessively high peaking factor. In this case, the axial offset is not a sufficient indicator of axial power distribution. As long as part length control rods are not used, the axial offset has been found to be sufficient to characterize axial power distribution.

A somewhat similar system is used by some nuclear power plants in Europe. In some French plants, gray rods are inserted as a function of power level to provide spinning reserve capacity. At 50% power, gray rods are fully or nearly fully inserted, at 75% power the gray rods are inserted half way and at one 100% power the gray rods are fully withdrawn. In Germany, some nuclear power plants use a weak bank of four conventional control rod assemblies which are inserted approximately 50 cm or apparently approximately one-quarter into the core at full power. As a larger number of conventional control assemblies are inserted into the core to adjust the axial distribution of power, the weak bank can be gradually withdrawn to maintain the same power level. The control rod assemblies selected for use in the weak bank are changed, e.g., every two weeks, to minimize localized burnup delays termed "shadow burnout". During load follow operation, the weak bank is inserted deeper into the core for a short period of time, "transient xenon dynamics" are exploited to minimize control rod insertion and boron concentration is changed to permit the weak bank to remain in the core to provide some spinning reserve capacity.

As should be apparent from the above descriptions, none of the known techniques avoid the use of changes in boron concentration during load follow operation. The French system uses gray rods in what may be termed a rigid, non-optimized control assembly management scheme. On the other hand, the German plants deliberately avoid the use of gray rods which makes their system more easily adopted, but less flexible in its ability to adjust axial distribution of power with little impact on radial distribution of power.

French document FR-A-2 244 235 generally discloses a method of operating a nuclear reactor by maintaining a bank of gray rods in the core during steady-state operation for at least a predetermined optimal period and by adjusting axial offset when a change in power is expected.

Derwent Abstract Publication AM 88-116 737 of the Japanese Patent application JP-A-63 06 3997 summarizes a load follow-up operation control system for pressurized water reactor comprising load follow-up control rods and a boron density regulating system.

Other background art in respect to methods for operating nuclear reactors using gray rods is found in EP-A-0 369 865 and FR-A-2 395 572.

Prior art set out above shows that there is a need for a method of controlling a nuclear reactor that minimizes the use of changes in boron concentration.

The above need is satisfied by a method of operating a nuclear reactor as set out in claim 1. Preferably, the axial offset is made approximately 10% more negative than the base load operation, when a reduction in power demand is expected. At the end of life of a fuel cycle when reactivity in the core is lower, a transition period of approximately one day is used to adjust the axial offset downwards, prior to the expected reduction in power demand. Preferably, the adjustment in axial offset during the transition day is made in two steps of approximately -5% each. If the reduction in power demand is expected to last for approximately one day or more, when the power demand is reduced, the axial offset is further adjusted by approximately -5%.

Preferably, the adjustment in axial offset is accomplished by reducing insertion of the gray rods and inserting a stronger bank of axial offset rods slightly into the upper region of the core. Reactivity is then reduced by initially returning the gray rods to full insertion and then inserting reactivity control rods. Preferably, the first reactivity control rods inserted into the core are gray reactivity control rods. Only after the gray reactivity control rods have been inserted approximately two-thirds into the core are stronger control rods inserted to further reduce reactivity. This has a more uniform effect on xenon concentration in the core. Preferably, the total neutron absorption worth of the gray reactivity control rods and the gray rods usually maintained in the core are approximately equal, so that the functions of these two banks of control rods can be switched approximately half way through a fuel cycle.

Fig. 1 is a plan view of a nuclear reactor core indicating control rod positions;
Fig. 2 is a plot of axial offset versus fuel use; and
Figs. 3-19 are plots illustrating control rod positions and reactor response under different conditions, each of Figs. 3-19 including seven individually numbered plots, e.g., Figs. 3A-3G.

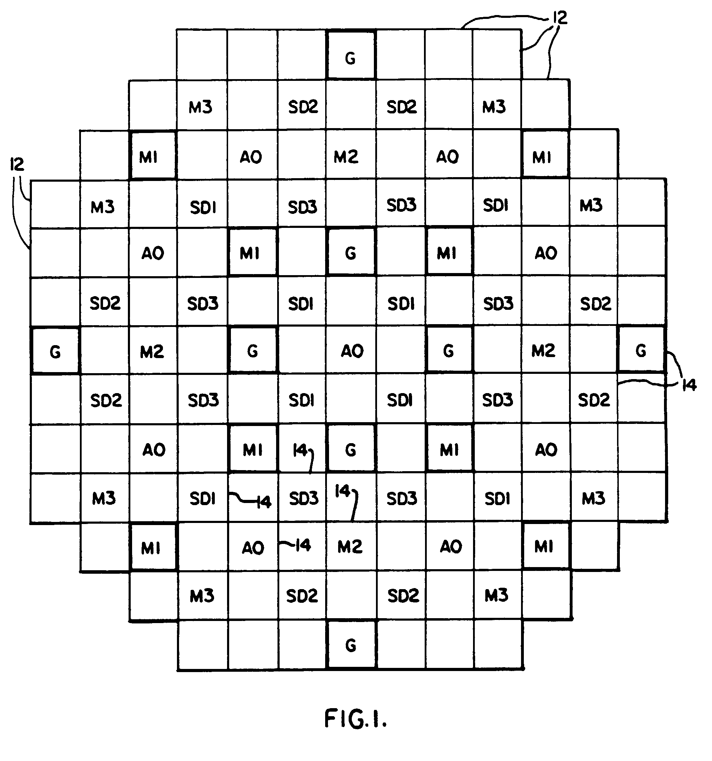

As illustrated in Fig. 1, the reactor core 10 of a nuclear reactor includes a plurality of clad nuclear fuel elements 12 (all of which are represented by empty squares with a representative few indicated by reference numeral 12). Also illustrated in Fig. 1 are rod cluster control assemblies (RCCAs) or control rods 14 all of which are indicated by an alphanumeric designation described below with a representative few indicated by reference numeral 14. The rod cluster control assemblies 14 are usually formed of rodlets connected together by a common RCCA spider. Typically, 24 rodlets are connected together to form a single RCCA or control rod. Groups of the control rods are maneuvered together as a bank. In the embodiment illustrated in Fig. 1, there are eight banks of control rods, each having a different alphanumeric designation. All eight of the squares labeled with a G are control rods in the G Bank. The remaining banks include eight RCCAs in the M1, M3 and SD1-SD3 Banks, four RCCAs in the M2 Bank and nine RCCAs in the AO Bank.

As discussed above, conventional "black" control rods are formed primarily of strong neutron absorbers, such as a combination of silver, indium and cadmium (Ag-In-Cd), but some control systems, such as those in French-built reactors, use a small number of gray rods which contain primarily stainless steel rodlets. In the preferred embodiment, the G Bank and M1 Bank are formed of gray rods each having twenty stainless steel rodlets and four Ag-In-Cd rodlets. The rodlets run the full length of the control rod and thus the gray rods used in the present invention have a substantially constant neutron absorption capability throughout.

The letters in the alphanumeric designations of the control rods indicate the purpose of the banks. The SD1-SD3 Banks are shutdown banks which are used only when the reactor is completely shut down. No further mention will be made of the shutdown banks SD1-SD3. The control rods labeled AO provide axial offset control described immediately below. The control rods labeled G and M1-M3 are primarily for reactivity control as discussed further below.

Conventionally, nuclear reactors are loaded with fuel in cycles. In cycle 1, all the fuel assemblies are unused or "unburned". During operation of the reactor, some of the fuel assemblies produce more energy than other fuel assemblies, i.e., "burn up" at a faster rate. Generally speaking, the fuel assemblies closer to the center of the core "burn" more quickly and those on the periphery of the core are used up more slowly. As a result, after a predetermined period of time or fuel usage, termed "cycle burnup", some of the fuel assemblies are completely spent, while others may still have more than half of their energy. Thus, at the end of the cycle burnup period, typically one-third of the fuel assemblies are replaced after the remaining assemblies have been rearranged. This process is repeated until at the end of the first three cycles, one-third of the core contains fresh fuel assemblies, one-third of the core contains "once-burned" fuel assemblies and one-third of the core contains "twice-burned" fuel assemblies in what are termed equilibrium cycles which follow the third cycle.

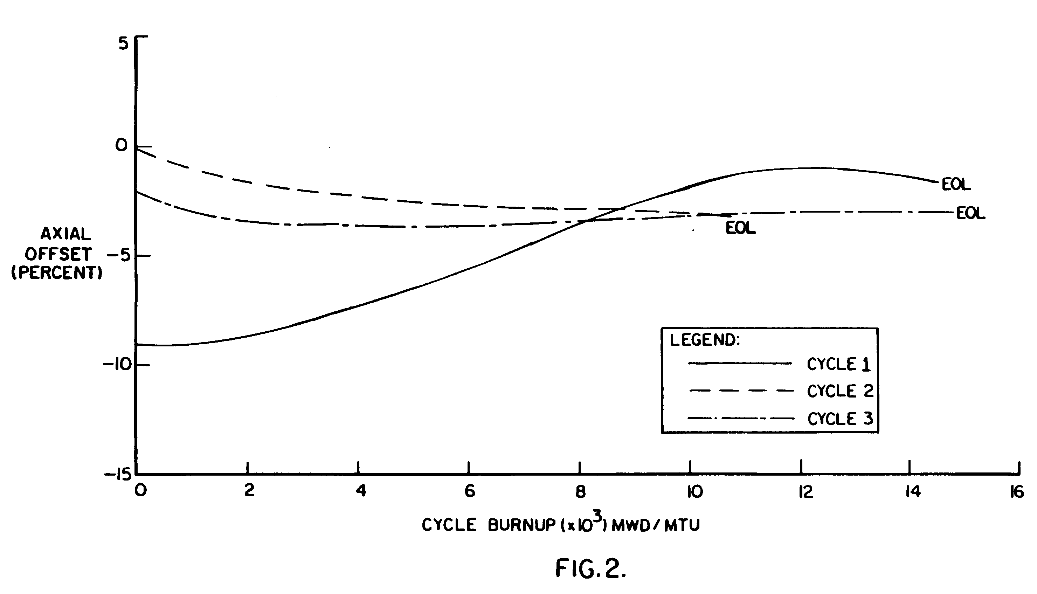

To maintain a stable distribution of power, the axial offset of the power distribution should be maintained as close as possible to the equilibrium value during power maneuvers. This equilibrium value depends on the core, cycle number and amount of burnup, as illustrated in Fig. 2. The values plotted in Fig. 2 are for a typical design of a pressured water reactor with units along the abscissa in megawatt days per metric ton of uranium (MWD/MTU). Each design will have different cycle lengths and may have different axial offsets, as known in the art. The axial offset control rods (AO Bank) are inserted into the upper region of core to adjust the axial offset downwards and are slowly withdrawn during the first cycle to produce the illustrated curve. The AO Bank has a relatively large strength as indicated in the Table below. Therefore, an approximately -10% change in axial offset at the beginning of life (BOL) in cycle 1 can be produced by inserting the AO Bank approximately 10% into the core.

<div align="center">TABLE</div>

| BANK | TYPE | OVERLAP | EQUILIBRIUM CYCLE WORTH (PCM) |
|------|------|---------|-------------------------------|
| G | Gray | | 440-560 |
| M1 | Gray | 0.0 | 470-600 |
| M2 | Black | 0.33 | 520-680 |
| M3 | Black | 0.33 | 1280-1480 |
| AO | Black | (NA) | 1320-1540 |

According to one embodiment of the present invention, there are two banks of control rods of roughly equivalent neutron absorption worth. An example of a range of neutron absorption worth is indicated in the Table. As apparent from the Table and Fig. 1, the gray rods have slightly less than one-half the neutron absorption worth of the conventional or "black" rods, since the four black rods in the M2 Bank have slightly more neutron absorption worth than the eight gray rods in the G Bank or the M1 Bank.

During base load, equilibrium operation of the reactor, the G Bank is fully inserted into the core, the M1-M3 Banks are fully withdrawn from the core and the AO Bank is slightly inserted to produce the appropriate axial offset illustrated in Fig. 2 based on the amount of burnup in the current cycle. The M1-M3 Banks are mechanical shim banks having the overlap indicated in the Table. The overlap of 0.0 for the M1 Bank indicates that the M1 Bank is not inserted into the core unless the G Bank is fully inserted. The overlap of 0.33 indicates that the M2 and M3 Banks are not inserted into the core until the preceding bank has been inserted two-thirds of the way into the core. Thus, M2 Bank begins to be inserted into the core when the M1 Bank is two-thirds of the way into the core and continues to be inserted at the same rate as the M1 Bank until a desired reactivity change has occurred. If a larger amount of reactivity reduction is required, the M3 Bank begins to be inserted into the core when the M2 Bank is two-thirds into the core and the M1 Bank is fully inserted into the core. The use of gray rods in the M1 Bank results in greater insertion than the same number of black control rods and less disturbance of the radial distribution than would be possible using black rods of equivalent neutron absorption worth. This results in a more even radial distribution of power and xenon concentration, compared to black control rods of equivalent worth and has less effect on the axial distribution of power and xenon, than would the same number of black control rods.

There are several ways to characterize axial distribution of power. One which is commonly used is axial offset (AO) as defined in equation (1), where $P_t$ is the percentage of full power generated in the top or upper region of core and $P_b$ is the percentage of full power generated in the bottom half or lower region of core.

$$AO = (P_t - P_b) / (P_t + P_b) \qquad (1)$$

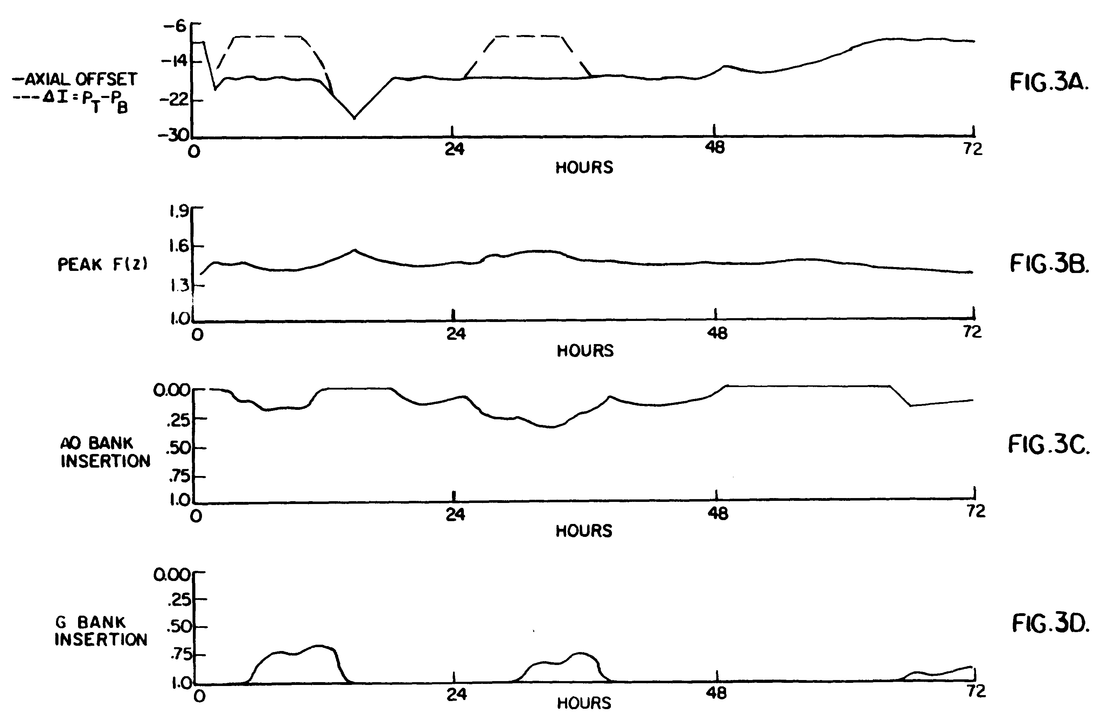

The target axial offset is the axial offset desired for operations under certain conditions. An example of the target axial offset for base load operation is illustrated in Fig. 2 for the cycle burnup of cycles 1, 2 and 3 in a typical pressurized water reactor. Variation of ±5% from the target axial offset is generally considered acceptable. The numerator in equation (1) is referred to as the flux difference or ΔI. During full power operation, ΔI is equal to AO, since the denominator will equal 1.0. When the power generated by the reactor is other than 100%, ΔI is a product of AO and relative power as indicated by the dashed line in Fig. 3A. Two excore flux detectors positioned at approximately the center of the upper and lower regions of core are conventionally available to provide the instrumentation necessary to obtain AO and ΔI.

Adjustments in control rod insertion are made in response to changes in the amount of power desired to be produced from a nuclear reactor. One example of a situation in which the power to be produced is changed is load follow operation, where the power produced by the nuclear reactor is adjusted depending upon demand from the electrical power grid. In the past, nuclear reactors were typically run at base load and other types of power plants, such as fossil fueled plants and hydro-electric plants were adjusted in response to changes in power demand. However, with an increasing reliance on nuclear power plants, at least some nuclear power plants in an electrical grid may at times be operated at less than full power.

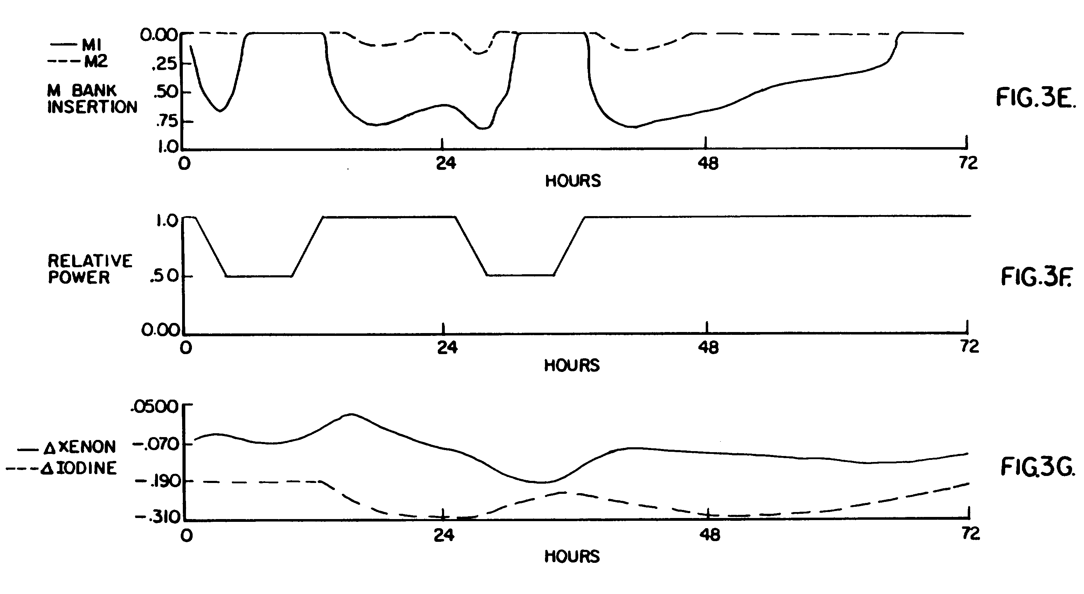

A typical power cycle is illustrated in Fig. 3F Twelve hours of full power operation are followed, after a power changing period of three hours, by a six hour period of half power operation. Another three hour period is used to return to full power operation for twelve hours. This pattern of operation may continue day after day, although only two days are illustrated in Fig. 3F.

Fig. 3 illustrates the response of the control system (Figs. 3C-3E), indicators of axial distribution of xenon (Fig. 3G), and indicators of axial power distribution (Figs. 3A-3B) for operation of a nuclear reactor at the beginning of life of the first fuel cycle with the common daily load pattern described above and illustrated in Fig. 3F. At this point in time during the fuel cycle of a nuclear reactor, the core is highly reactive which is compensated by a high concentration of boron solution. It is assumed that the nuclear reactor is at base load operation, i.e. generating full power under equilibrium conditions, at the beginning of the time period illustrated in Fig. 3. Thus, the axial offset is approximately -9%, corresponding to the beginning of the solid line in Fig. 2. Fluctuations of approximately ±5% from the target axial offset are considered acceptable. According to the present invention, the target axial offset is adjusted by approximately -10% when power is reduced by about one-half. The downwards axial offset adjustment is preferably more than 5%, so that it is effective, but less than 20%, so that axial distribution of power is not too greatly skewed. A change of -8% to -12% is preferably used.

In some situations axial offset may not be sufficient to characterize desirable power distribution in a nuclear reactor. However, as long as no part length control rods are used, a "pinched" power distribution can be avoided. Under this condition, axial offset is sufficient to characterize peaking factor, i.e., peak flux divided by average flux or F(z), as illustrated in Fig. 3B. Generally speaking, F(z) values below 1.6 are desirable for normal conditions. To produce the power cycle illustrated in Fig. 3, when the reduced demand for power is received, first the M1 Bank is inserted into core as illustrated by the solid line in Fig. 3E. Due to the insertion of these eight gray control rods in the top of core, the axial offset is begun to be moved downwards from the -9% which is the base load target axial offset at the beginning of life in cycle 1. As the M1 Bank penetrates into the middle half of the core, the M1 control rods do not have any significant effect on axial offset. To continue the decrease of axial offset to approximately -19%, the AO Bank is gradually inserted, as illustrated in Fig. 3C. The insertion of the M1 Bank causes a build-up in xenon due to reduced power throughout the approximately upper 70% of core. As a result, power is maintained at 50% by gradually withdrawing the M1 Bank for the first approximately three hours at half power. To continue operation at half power after the M1 Bank has been withdrawn, an increase in reactivity is required. Conventionally, the concentration of boron in the coolant would be reduced to maintain the reactor at half power. However, because the G Bank was fully inserted in the core during base load (full power) operation, the G Bank can be withdrawn as indicated in Fig. 3D to produce the additional reactivity required to maintain the reactor at half power despite the build-up of xenon. When a return to full power is demanded, the three hour power changing period is created by further withdrawing the G Bank beyond the 75% insertion level as illustrated in Fig. 3D.

The withdrawal of the G Bank increases reactivity in the lower region of core without affecting the reactivity in the upper region of core. To maintain the axial offset at the new target of approximately -19%, the AO Bank is withdrawn during the return to full power as illustrated in Fig. 3C. However, before the AO Bank is withdrawn, the axial distribution of xenon becomes top skewed due to the lower power in the top half of core compared to the higher power in the bottom half of core caused by the withdrawal of the G Bank. The resulting effect on the indicators Δ xenon and Δ iodine is illustrated in Fig. 3G. The indicator Δ xenon is the difference in the number of xenon nuclei in the top half of core and the bottom half of core using equation (2). The indicator Δ iodine is calculated in a similar way and normalized to equilibrium Δ xenon for representation by the dashed line in Fig. 3G.

$$\Delta Xe \;=\; \frac{1}{H}\;\left[\;\int_{M}^{T} Xe(z)\,dz \;-\; \int_{B}^{M} Xe(z)\,dz\;\right] \qquad\qquad (2)$$

Where H is the core height and T, M and B are respectively the top, middle and bottom position of core along the z axis. The quantity of xenon and iodine nuclei concentrations at a given location in core is determined in a conventional manner using xenon-iodine equations together with the neutron diffusion equation.

After the return to full power, xenon concentration has been reduced significantly in the lower region of core. To maintain control of the reactor at full power, the G Bank is reinserted fully into the core shortly after full power is attained. At this time, the distribution of xenon is positively skewed, i.e., there is more xenon in the upper half of core than the lower half of core. This tends to make the axial offset more negative, so the AO Bank is withdrawn to offset this downward shift in power. However, the G Bank alone is insufficient to maintain the proper level of reactivity and the AO Bank is fully withdrawn, so that there is no way to adjust the axial offset without affecting the power level. To maintain the power level at full power, the M1 Bank is reinserted into the core. Once again, the fact that the M1 Bank is relatively weak and formed of gray rods allows the M1 Bank to be deeply inserted into the core as illustrated in Fig. 3E in the last third of the first twenty-four hour period. This minimizes the effect on axial offset of the rods controlling the reactivity. After the M1 Bank has been inserted two-thirds into the core, the M2 Bank is inserted slightly into the core to maintain reactivity. As Δ xenon begins to approach an equilibrium value, the axial offset gradually returns to the target value and is maintained using the AO Bank during the last quarter of the first twenty-four hour period. The maximum deviation of the axial offset from the target axial offset is approximately 5% which as noted above is acceptable. This bottom skewed power distribution causes an F(z) value of almost 1.6, which is also within acceptable limits.

At the beginning of the request for reduced power during the second twenty-four hour period, the M1 Bank is still inserted approximately 60% into the core and the AO Bank is slightly inserted to maintain the target axial offset of -19% for load follow operations at the beginning of life of cycle 1. However, the highly negative W iodine at the end of the first twenty-four hour period causes a significantly negative Δ xenon during the first half of the second twenty-four hour period as illustrated in Fig. 3G. This enables the target axial offset to be maintained throughout the change in relative power during the second twenty-four hour period without any strong disturbances in F(z). In fact, the AO Bank is inserted well into the upper half of the core to maintain the target axial offset.

A third day of load follow operation will show almost exactly the same behavior as the second day of load follow operation, because Δxenon and Δiodine are almost identical at the beginning and end of the second day as, illustrated in Fig. 3G. Therefore, a third day of load follow operation is not illustrated. As apparent from the above discussion, load follow operations in a typical daily load demand pattern can be accomplished according to the present invention at the beginning of life of cycle 1 without requiring adjustments in boron concentration and without causing severe disruption of axial power distribution. As illustrated in the third twenty-four hour period, return to full power is accomplished without any difficulty.

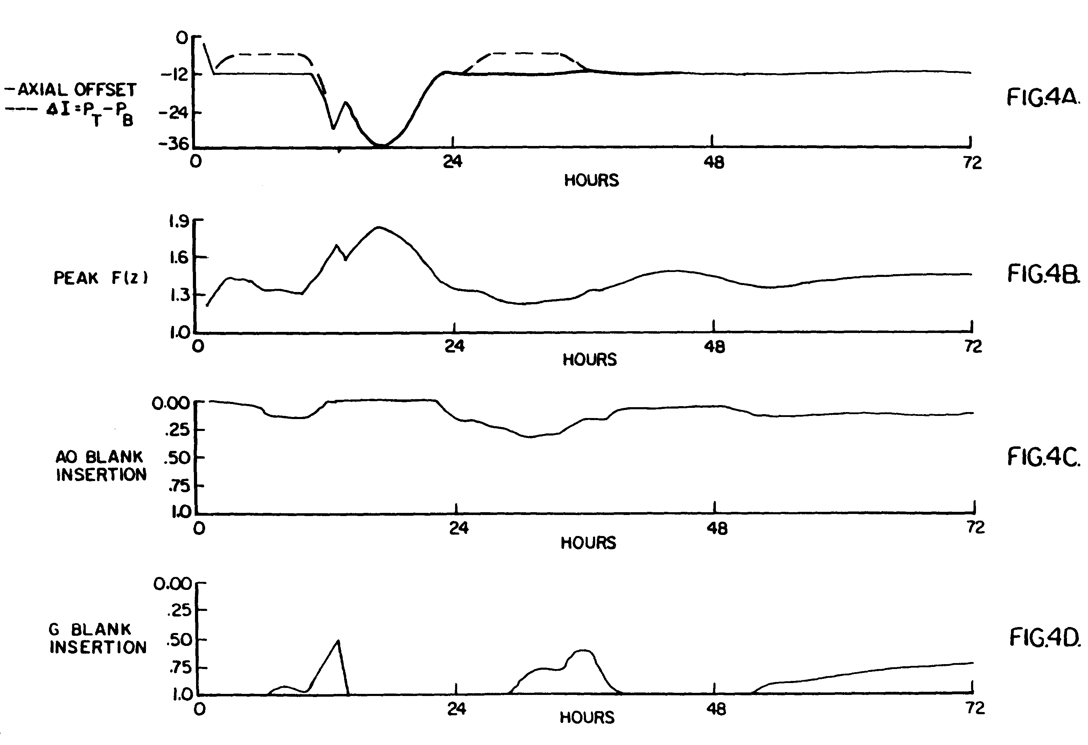

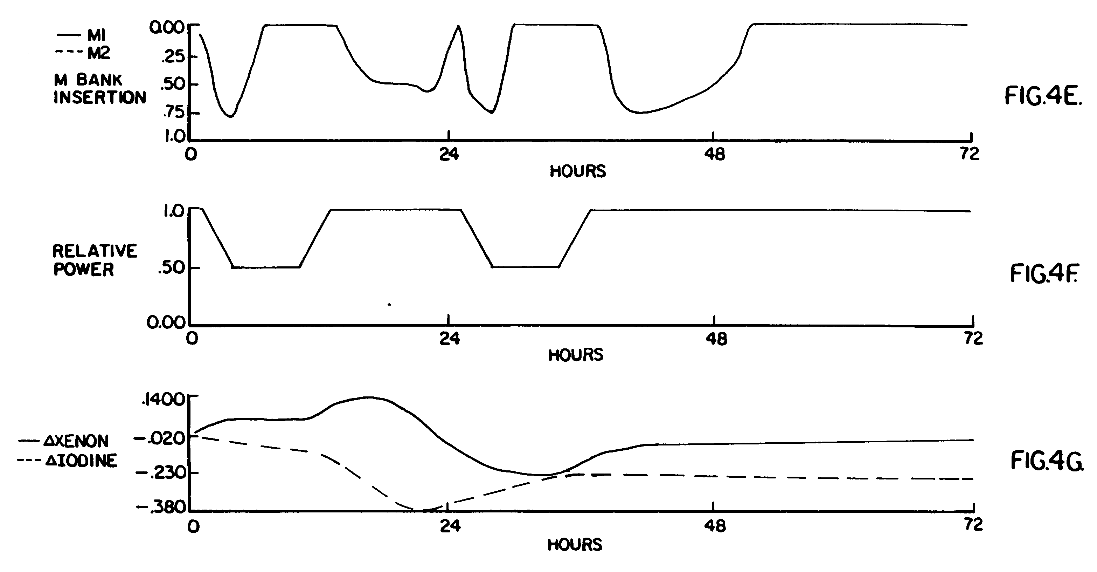

Figs. 4A-4G illustrate the results of using the same method of operation illustrated in Fig. 3 at the end of life of cycle 1. As illustrated in Fig. 2, the axial offset at the end of life of cycle 1 is approximately -1%. A downward shift of even -12% does not permit axial offset and F(z) to remain within the acceptable limits noted above after the return to full power, due to the top-skewed xenon distribution illustrated in Fig. 4G. Therefore, the present invention uses a transition day to lower the axial offset and allow the xenon distribution to stabilize, prior to beginning load follow operation at the end of life of cycle 1.

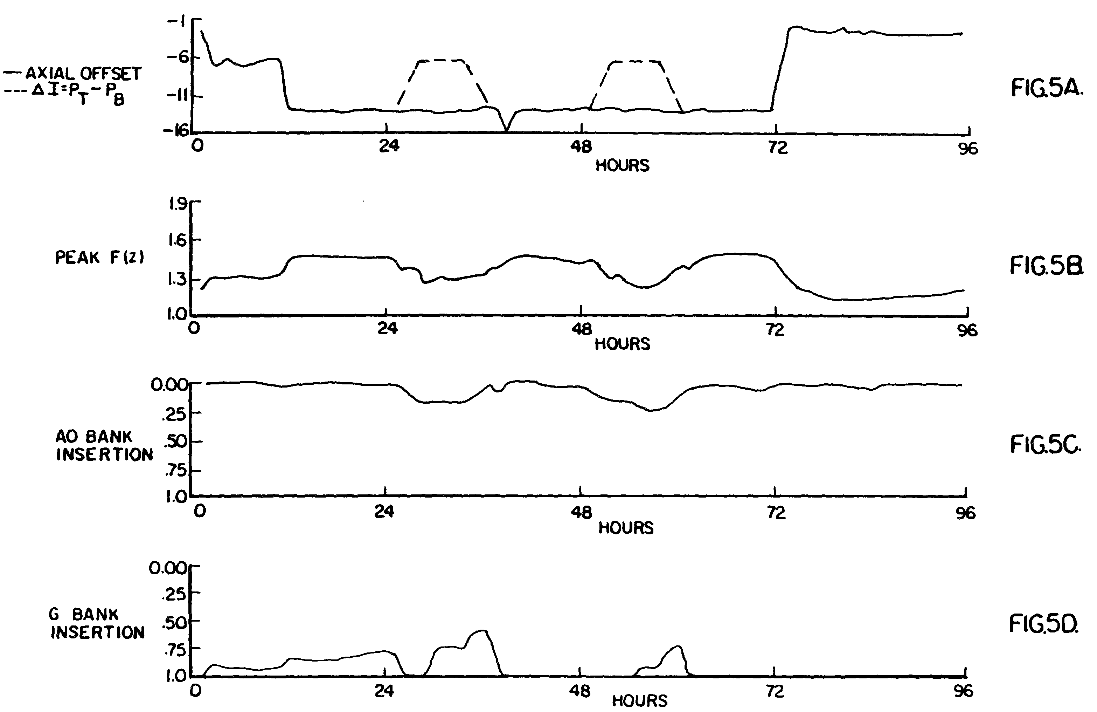

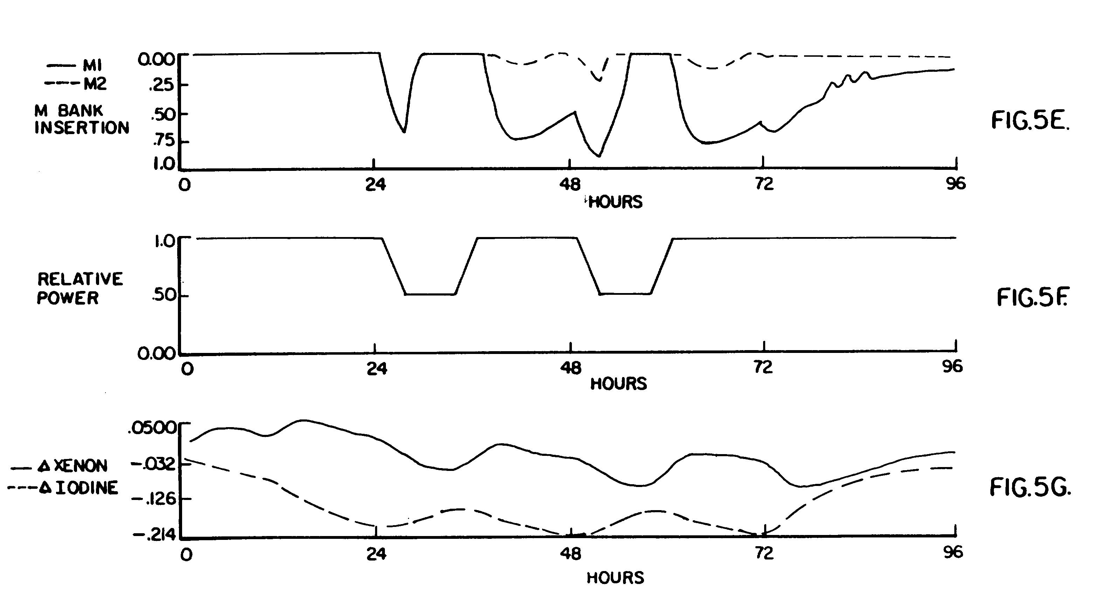

An embodiment of the present invention using a transition day is illustrated in Fig. 5 for the daily load follow operation at the end of life of cycle 1. As illustrated in Fig. 4A, axial offset is reduced by approximately -12% in two steps. During the first twelve hours of the transition day, axial offset is reduced to -6% by initially inserting the AO Bank and slightly withdrawing the G Bank. Withdrawal of the G Bank increases reactivity at the bottom of the core to counteract the loss of reactivity due to the AO Bank insertion and also aids in shifting the axial offset downwards. Another insertion of the AO Bank and further withdrawal of the G Bank during the second half of the transition day results in an axial offset of approximately -13% for a downward shift of approximately -12% from the base target axial offset for the end of life of cycle 1. The time periods between and after the two steps of axial offset adjustment are selected to allow the xenon and iodine distribution to settle down before low power operation is expected to begin.

As illustrated in Fig. 5G, the control rod manipulation during the transition day causes the xenon distribution to be top-skewed and the iodine distribution to be bottom skewed. However, by the end of the transition day, xenon is already beginning to return to equilibrium and iodine has almost bottomed out. As a result, the pattern of control rod movement for load follow operation in Figs. 5C-5E is almost identical to the pattern of control rod movement during load follow operation at the beginning of life of cycle 1 as illustrated in Figs. 3C-3E. Meanwhile, the effect on axial offset and F(z) are further within the acceptable limits than during load follow operation at the beginning of life. A transition day could be used at the beginning of life to improve the axial power distribution, but is not necessary because the response of the nuclear reactor to control rod movement according to the present invention is within acceptable limits without the use of a transition day.

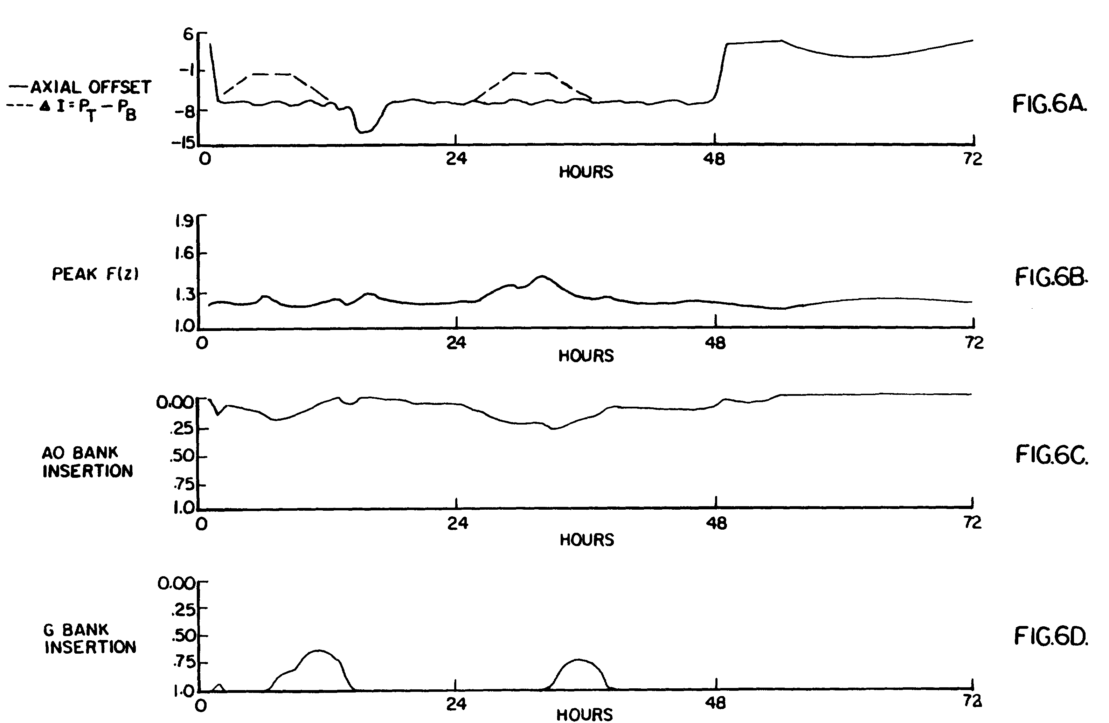

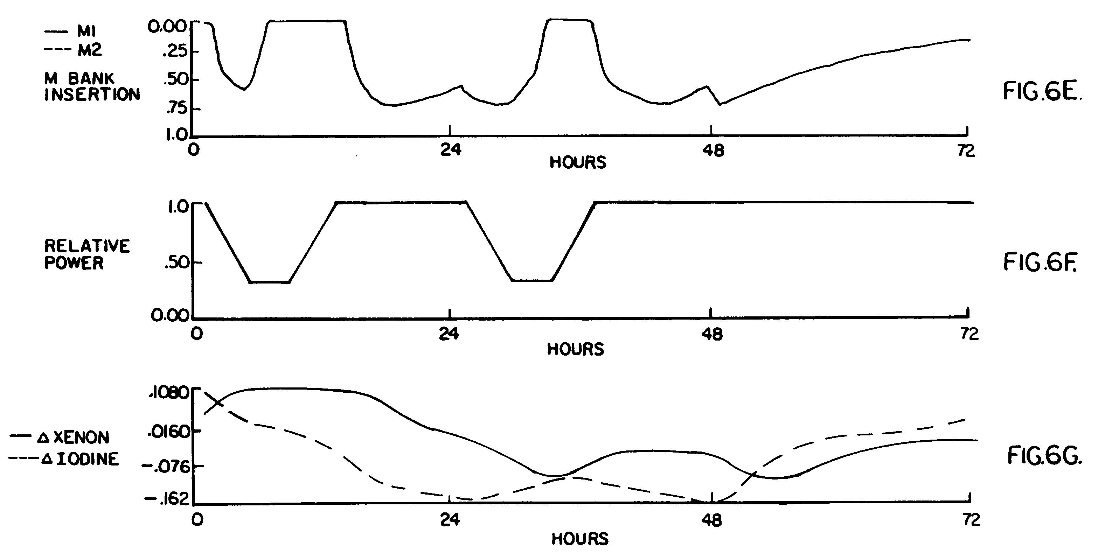

The methods according to the present invention are able to handle more than just the typical daily load fluctuations illustrated in Figs. 3 and 5. As a first example, take the situation where during a half day of lower power demand, the lowest power demand is 30% of full power, instead of 50%. Assuming the same rates of increase and decrease, the pattern of relative power illustrated in Fig. 6F results. This load follow operation was simulated for the beginning of life of an equilibrium cycle, i.e., for one of the cycles after cycle 3 where one-third of the core has just been replaced, one-third of the core is "once burned" and one-third of the core is "twice burned". Although not illustrated in Fig. 2, the target axial offset for base load operation at the beginning of life of an equilibrium cycle is approximately +3%. Thus, a downward shift of -10% results in a target axial offset for load follow operation of approximately -7% as illustrated in Fig. 6A. As a result of the high axial offset during base load operation, the iodine and xenon distribution is initially top-skewed. Due to the deeper drop in relative power compared to that illustrated in Fig. 3, the length of time of AO Bank insertion and the M1 Bank insertion is greater and the length of time of the G Bank withdrawal is shorter, while the extent of the G Bank withdrawal during the increase from low power to full power is higher than in the situation illustrated in Fig. 3. The drop in axial offset is similar to that in the situation in Fig. 3 and still within the ±5% tolerance range, but the highest $F(z)$ value occurs on the second day, rather than the first, and in general is lower than at any time at the beginning of life of cycle 1 where the base load target axial offset is -10% producing a bottom skewed power distribution even during base load.

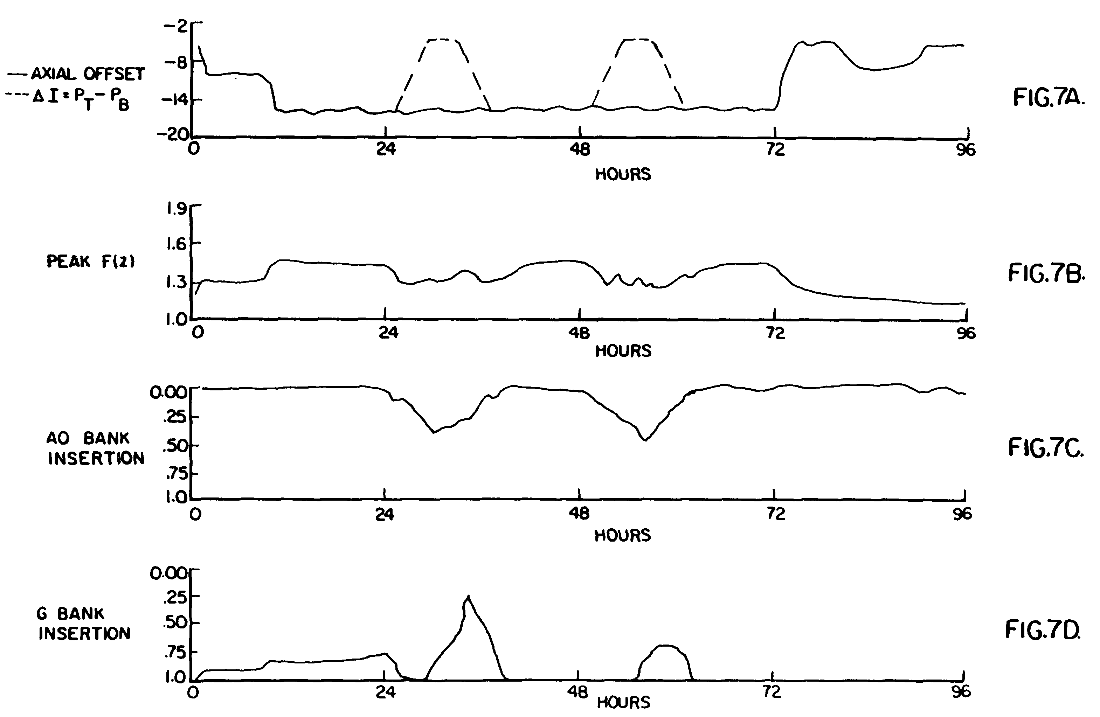

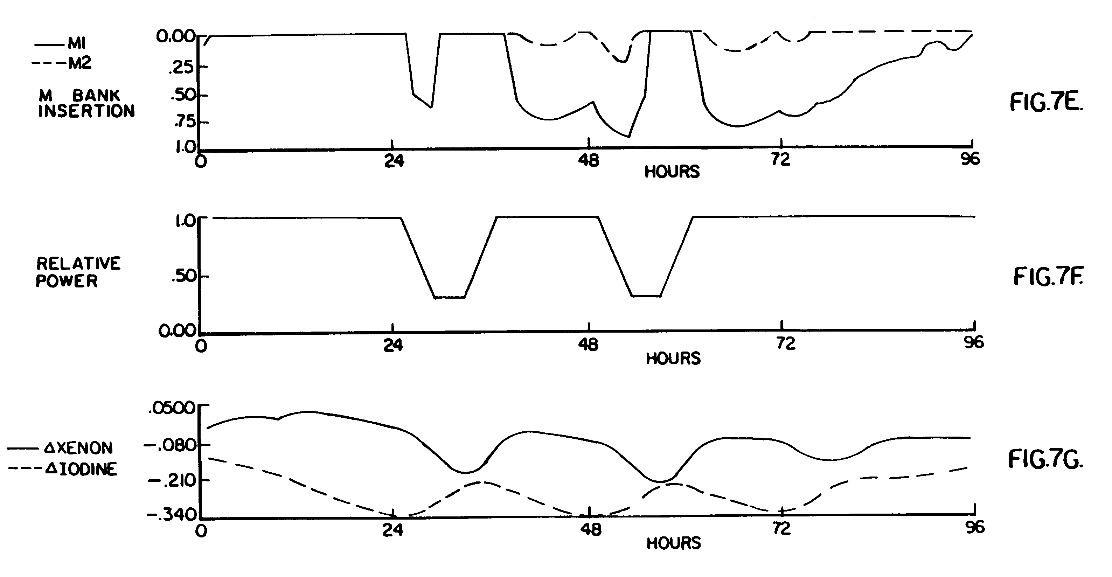

If the same load demand pattern illustrated in Fig. 6F occurs at the end of life of an equilibrium cycle, the use of a transition day which is the preferred method at the end of life permits the reactor to be operated in load follow mode with ease. As illustrated in Fig. 7, the M banks movement pattern is almost the same as a six hour demand for 50% power at the end of life of cycle 1 as illustrated in Fig. 5D. However, due to a larger power reduction resulting in a more severe xenon transient, the amount of insertion of the AO Bank and withdrawal of the G Bank is greater for the 70% power reduction illustrated in Fig. 7 than the 50% power reduction illustrated in Fig. 5.

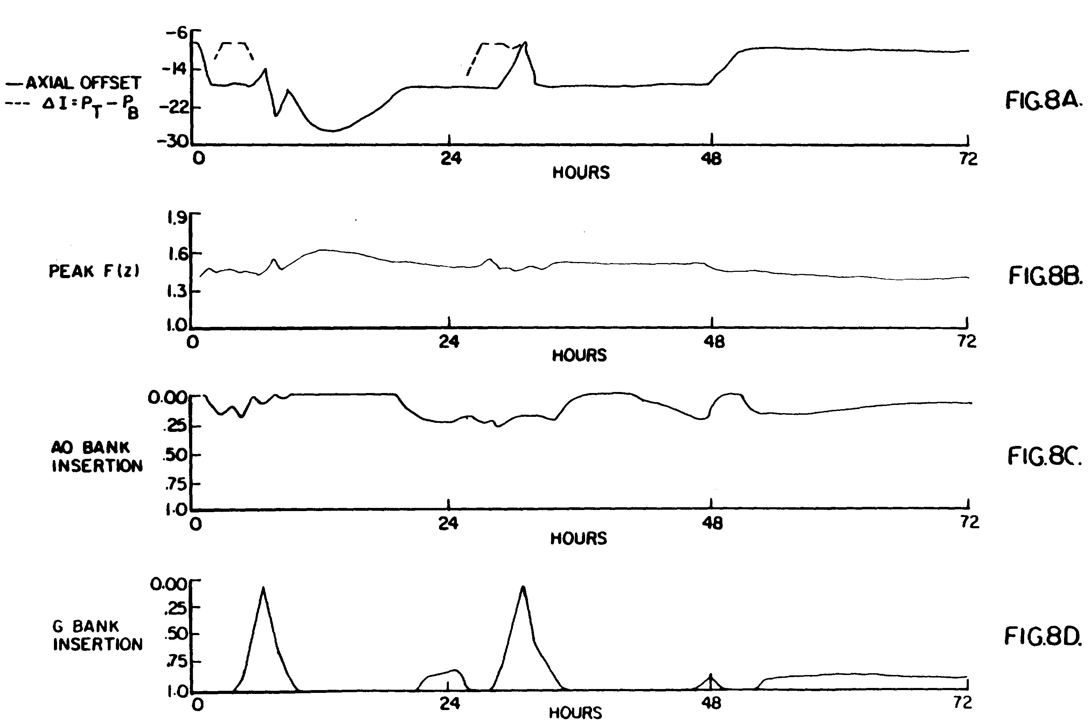

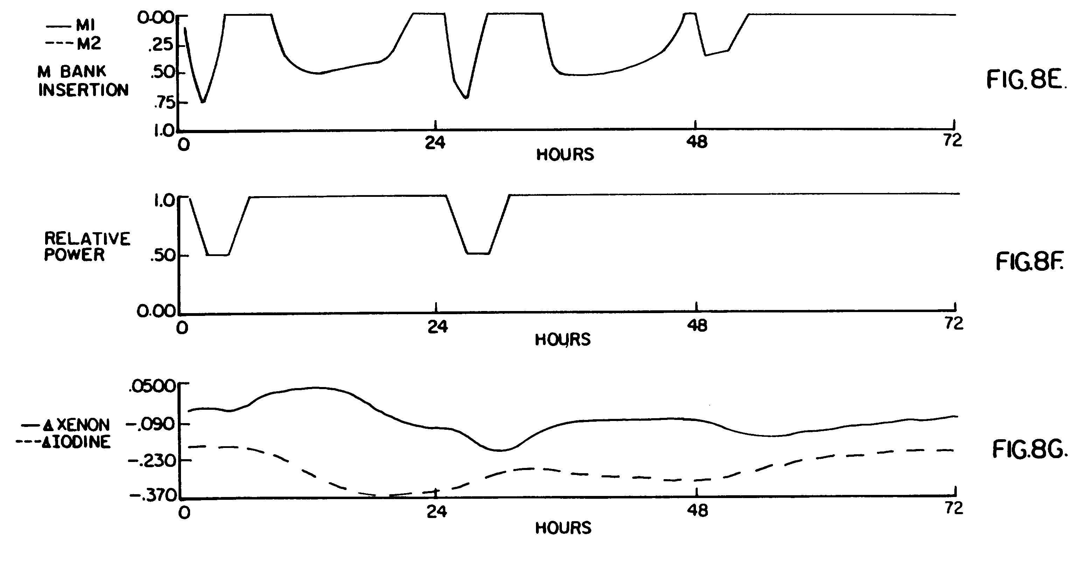

In addition to the fairly typical demand patterns described above, the Electric Power Research Institute (EPRI) has established two patterns of power demand for load follow operation without changes in boron concentration. Both patterns are similar to the first typical daily pattern illustrated in Figs. 3-5 in that operation changes from full power to half power and back to full power again. The first EPRI pattern has 18 hours of full power operation, two hours of half power operation and power changing periods of two hours on either side of the half power operation. The second pattern also uses two hour power changing periods, but the remaining 20 hours is equally split between full power and half power operation. Based on the simulations illustrated in Figs. 3-7, as expected, the first pattern of power demand at the beginning of life of cycle 1 without a power changing day comes closest to the limits of acceptable operation. In fact, due to the short period of low power operation and the steep power changing period as illustrated in Fig. 8A, the axial offset is approximately 10% below the target axial offset for a few hours during the middle of the first return to full power. A transition day could prevent this from occurring, but since $F(z)$ remains below 1.6, this condition is considered acceptable. During the second day just as the reactor returns to full power operation, the axial offset is approximately 7% above the target axial offset for a very short period of time. In this case, $F(z)$ is even lower and the slightly excessive axial offset is therefore considered acceptable.

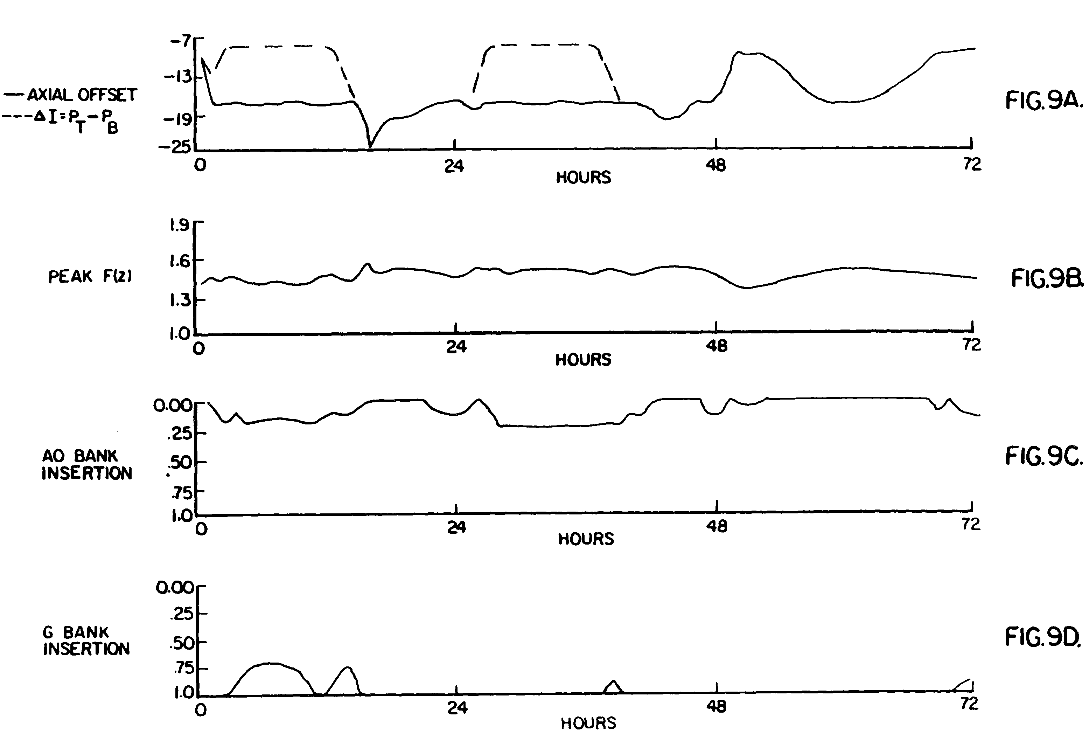

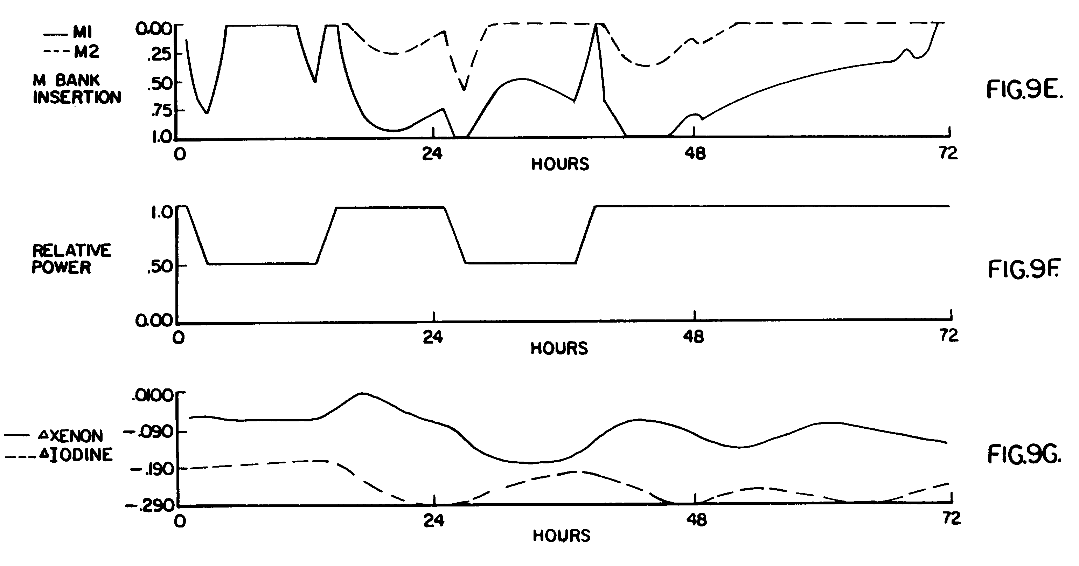

As illustrated in Fig. 9A, the second EPRI cyclical power pattern also causes a short-lived axial offset of more than 5% from the target axial offset at the beginning of life of cycle 1. However, $F(z)$ remains well below 1.6 and therefore the response of the reactor using the method of the present invention without a transition day is considered acceptable. Once again, a transition day could be added preceding the load follow operation to keep the axial offset within 5% of the target axial offset.

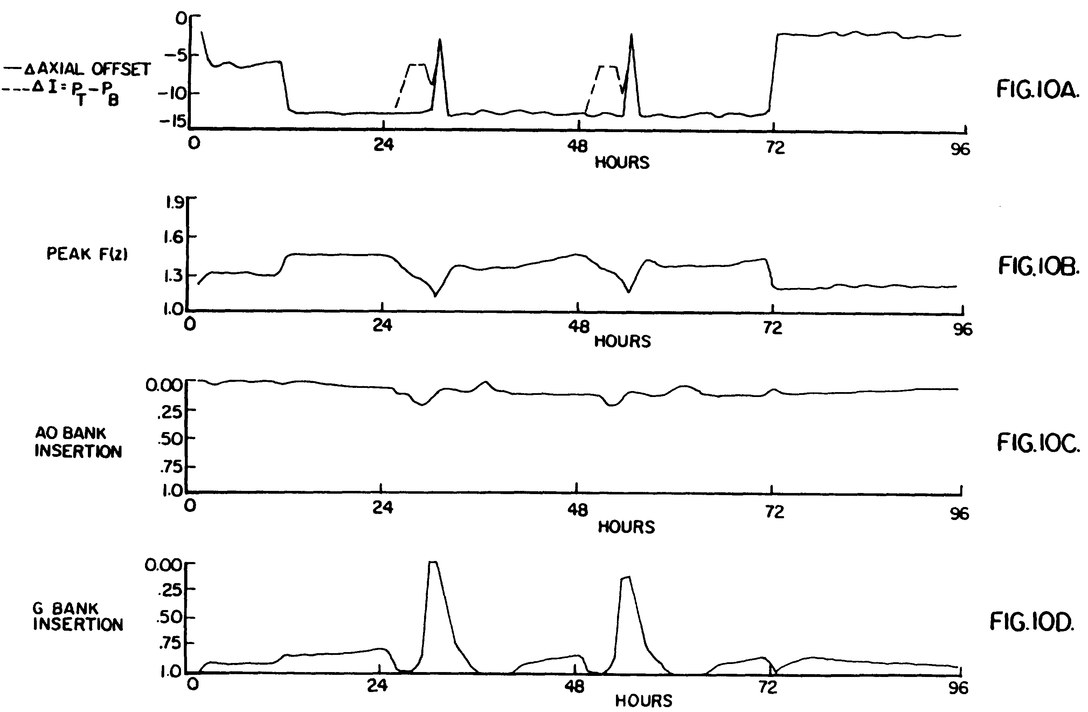

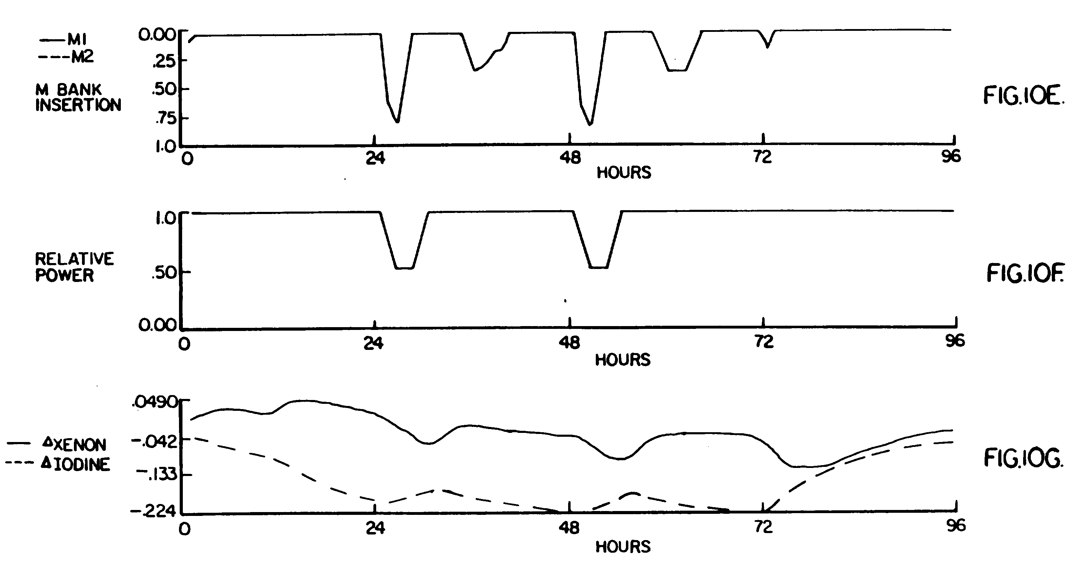

A special exception to the general rules of acceptable system response is illustrated in Fig. 10. The first EPRI pattern of a two-hour, half-power operation with two hour power changing periods from high to low power and back again at the end of life of cycle 1 is illustrated in Fig. 10. A transition day is used to reduce the target axial offset from approximately -2% to -13%. This change is obtained by the same control rod movement and produces the same effects on xenon distribution as illustrated in Figs. 5C-5E and 5G. However, the return to full power occurs while Δ xenon is at its most negative value during the second day, instead of as Δ xenon is becoming more positive in the slower return to power in the power demand pattern of Fig. 5F. In addition, the G Bank must be fully withdrawn to provide the steep return to full power. As a result, the AO Bank cannot be inserted into the core to prevent the axial offset from becoming more positive, without slowing the rate of return to power. This causes a short-lived spike of approximately +10% in the axial offset. However, since the target axial offset was shifted downwards by slightly more than 10%, this axial offset spike actually causes a reduction in the peak $F(z)$ and since it is so short-lived, such spikes are perfectly acceptable. A nearly identical spike occurs during the second day. Also, Δ xenon is becoming progressively more negative each day continuing into the third day during continuous full power operation.

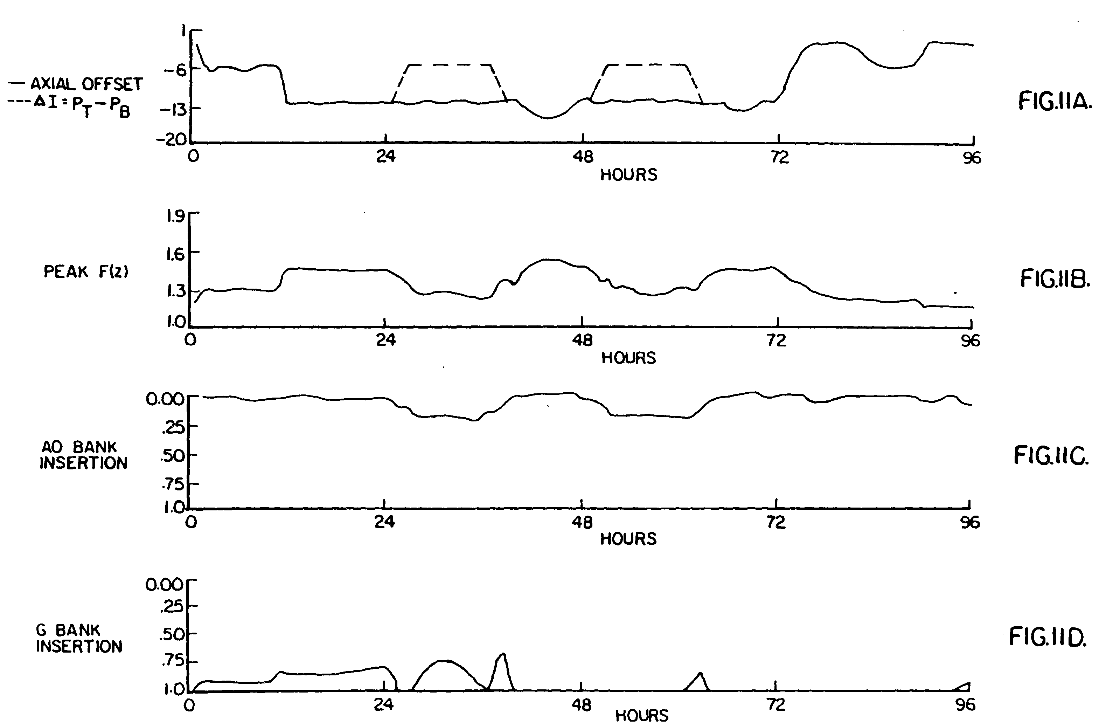

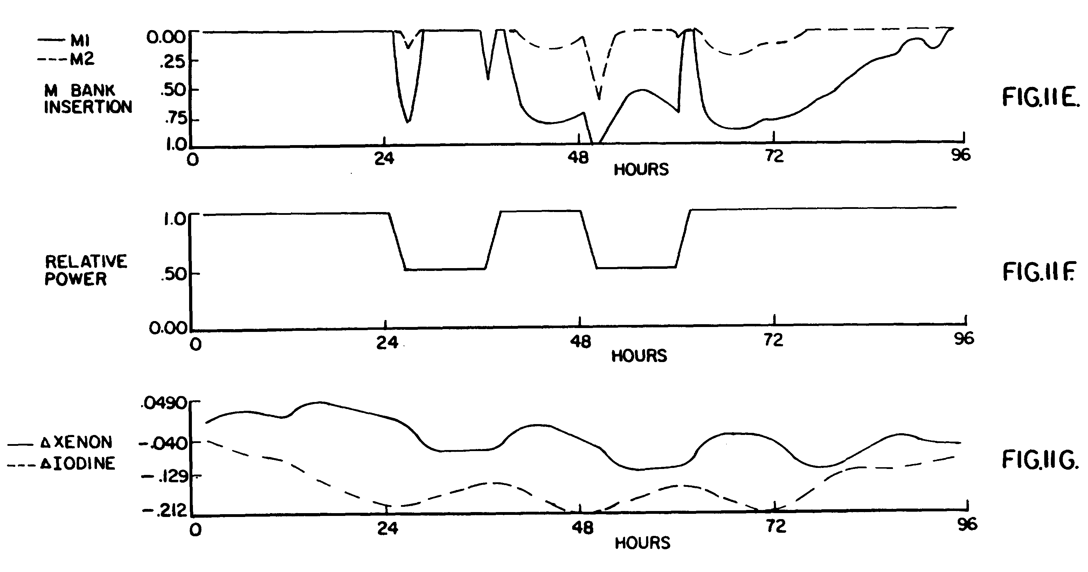

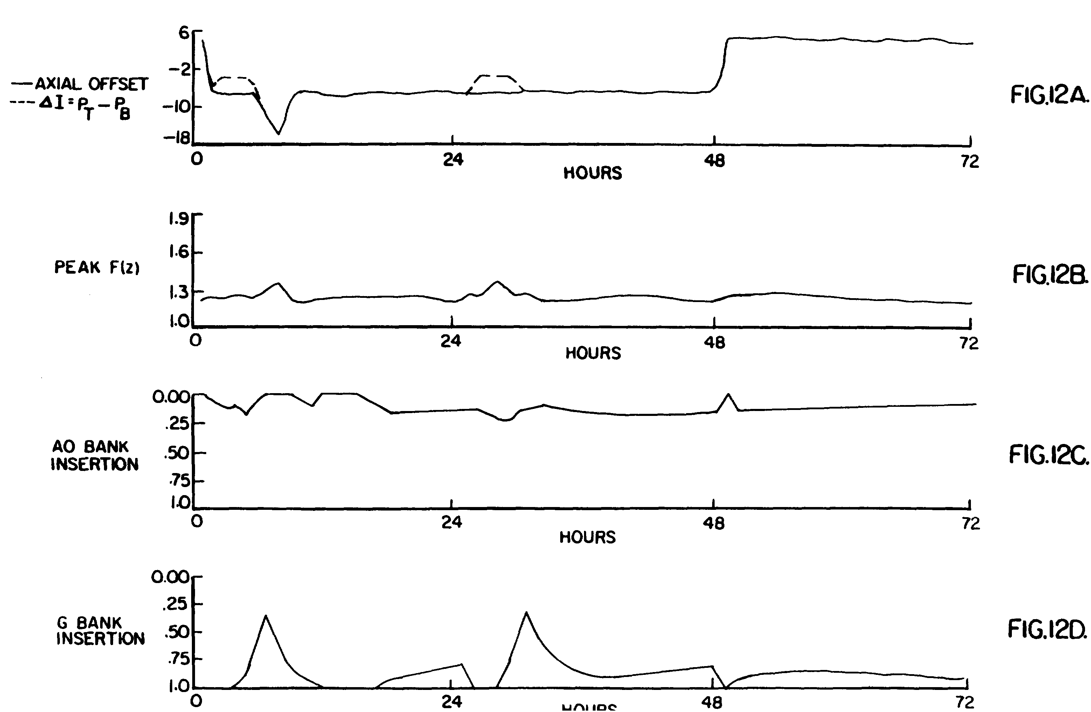

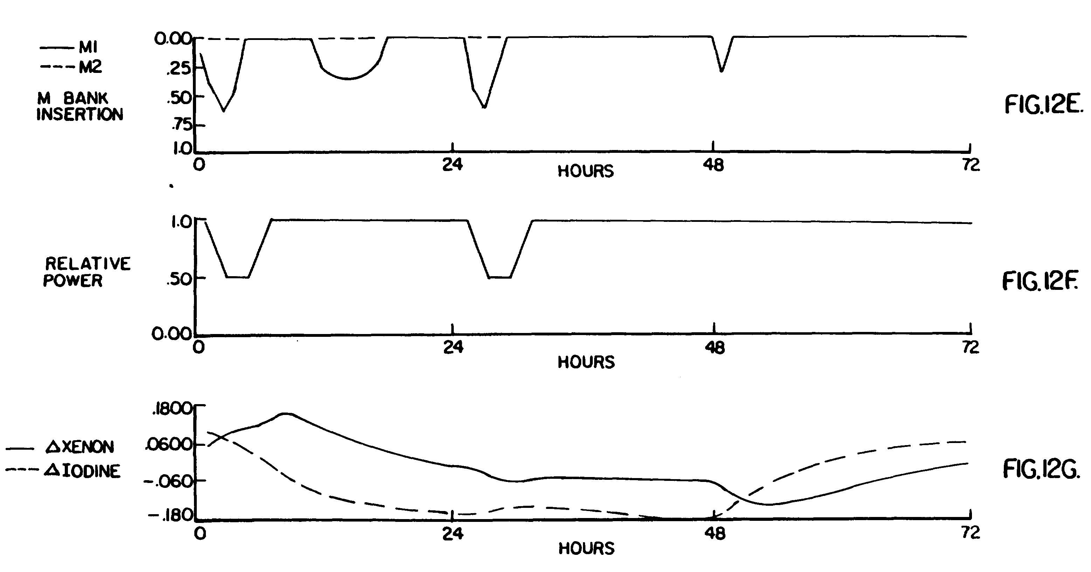

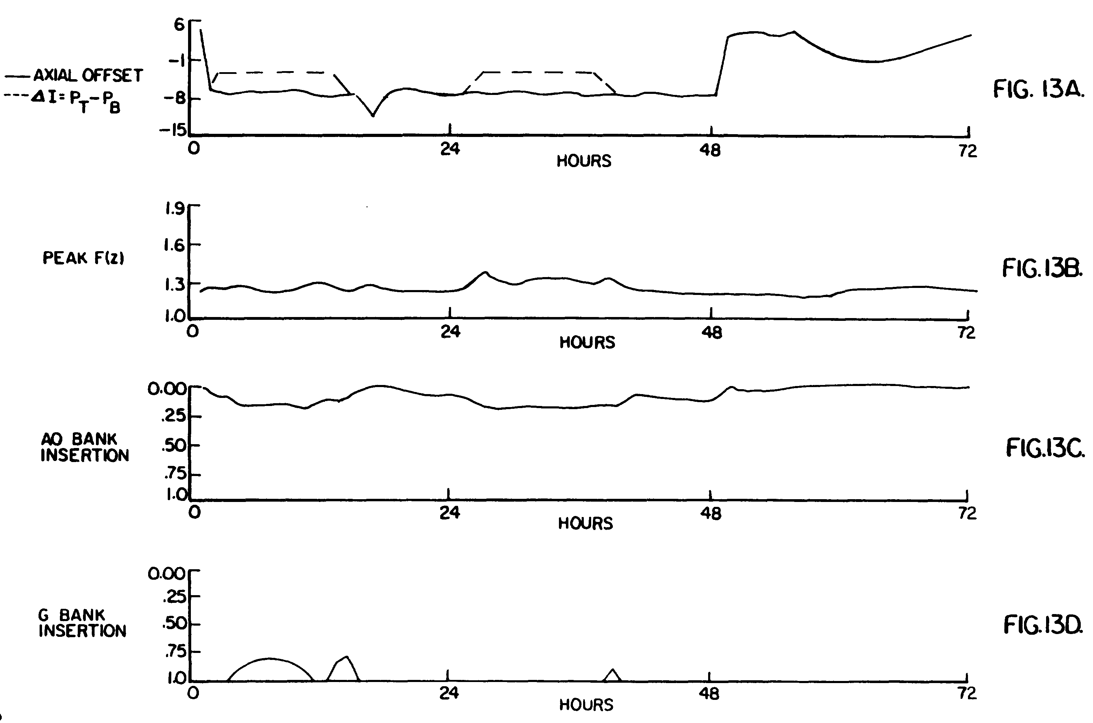

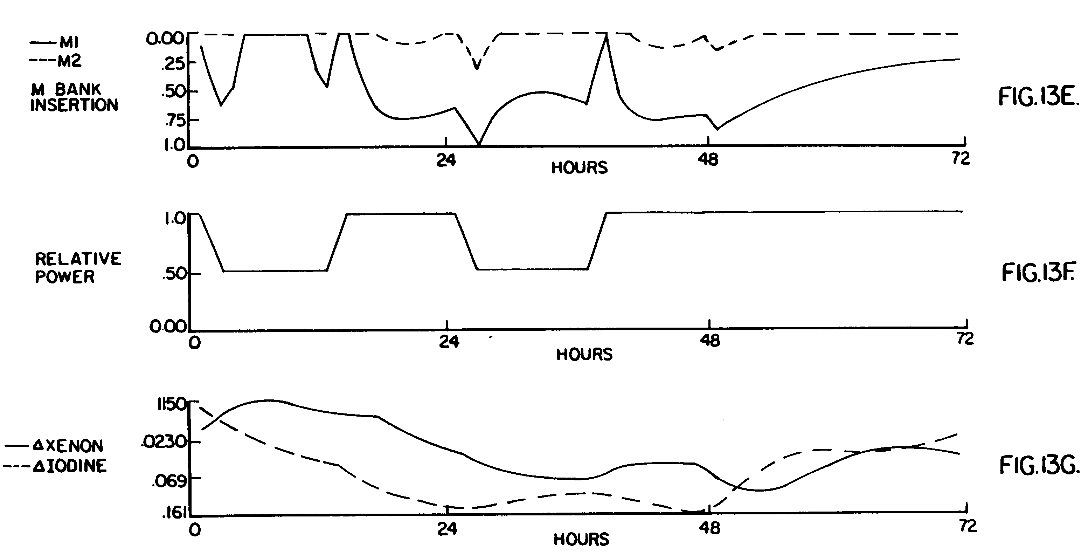

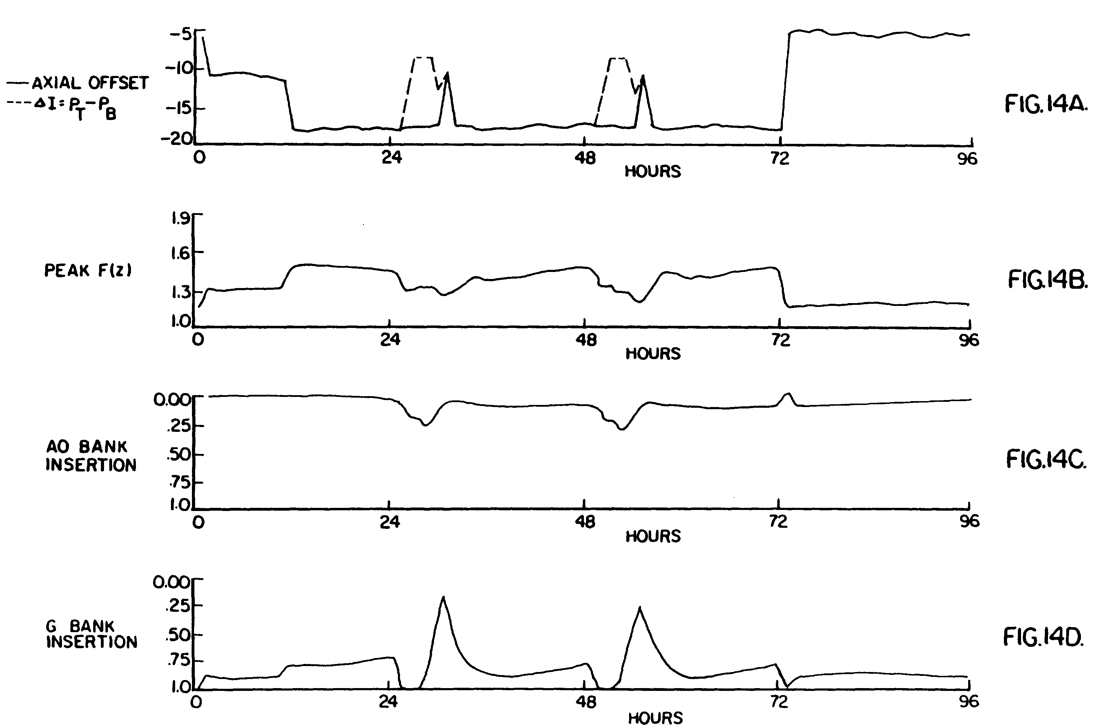

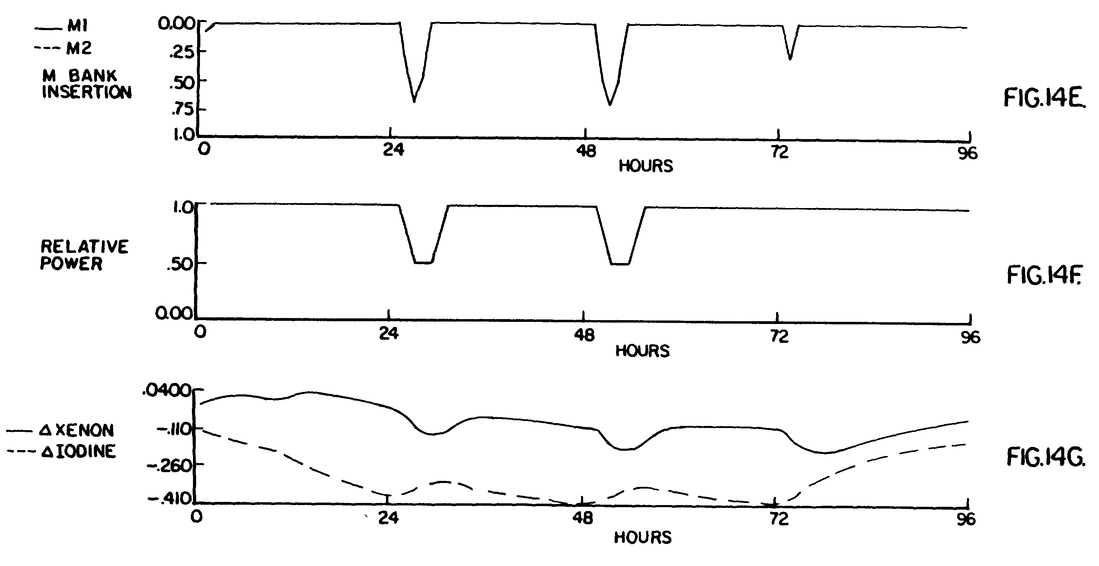

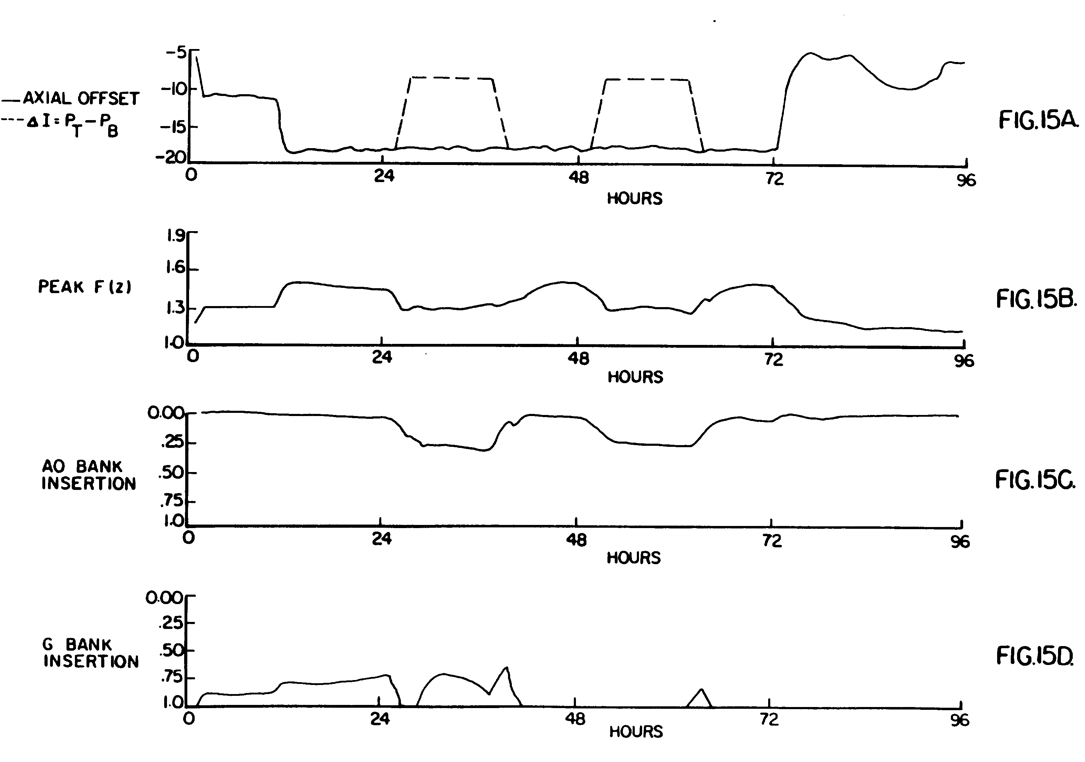

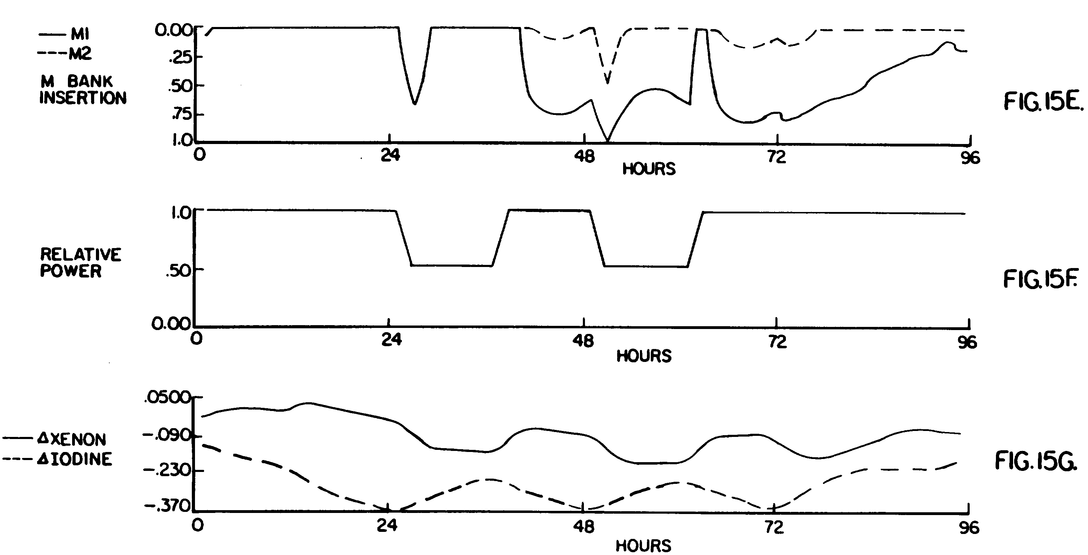

If the second EPRI pattern of power change is produced during the end of life of cycle 1, a one day transition from -2% to -13% axial offset results in operation of the nuclear reactor which is well within the acceptable limits described above, as illustrated in Fig. 11. Similar satisfactory operation occurs when one of the methods according to the present invention is applied during an equilibrium cycle for the EPRI power change patterns. The first EPRI pattern for the equilibrium cycle at the beginning of life is illustrated in Fig. 12. Without a transition day, F(z) only rises slightly above 1.3 for a very short period of time during the return to full power. During the first day, the 1.3 value of F(z) occurs when the axial offset shifts downward from the target axial offset by slightly more than 5%, but this is considered acceptable since it is very short-lived and F(z) is so low. The second EPRI pattern for the beginning of life of the equilibrium cycle has an even shorter negative shift from the target axial offset, as illustrated in Fig. 13A and is thus completely acceptable. The end of life of the equilibrium cycle for the first and second EPRI patterns are illustrated in Figs. 14 and 15 with a transition day. In both cases, the resulting axial offset and F(z) patterns are similar to those of cycle 1 at end of life, as illustrated in Figs. 10 and 11, respectively, with less extreme deviations from the target axial offset.

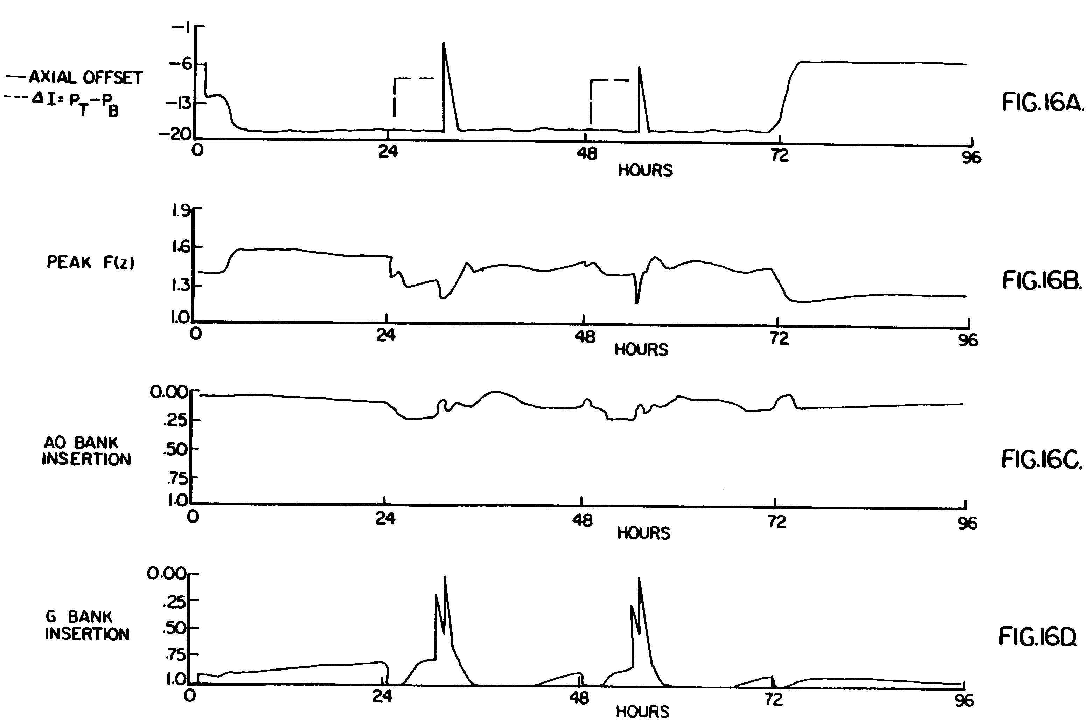

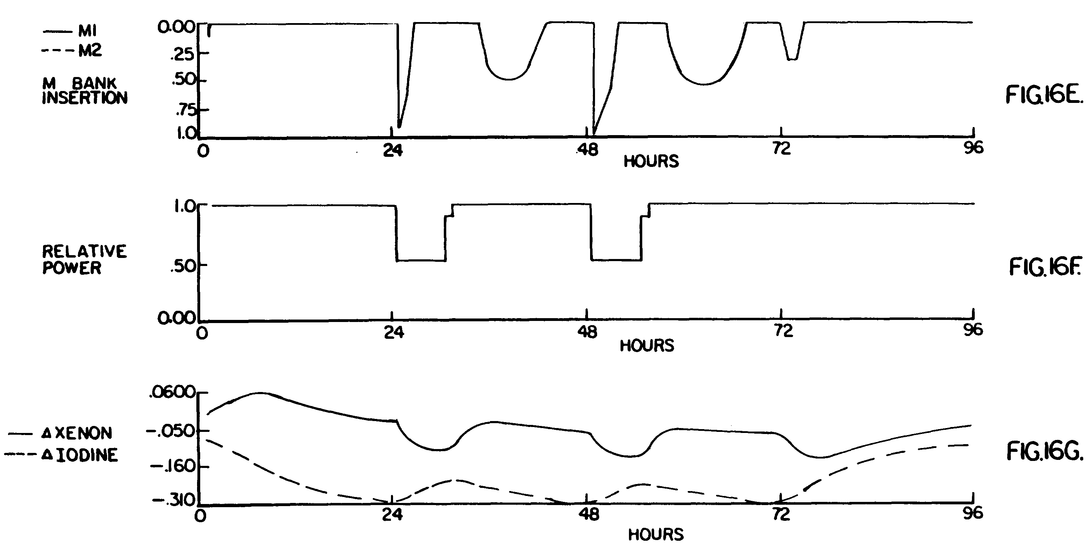

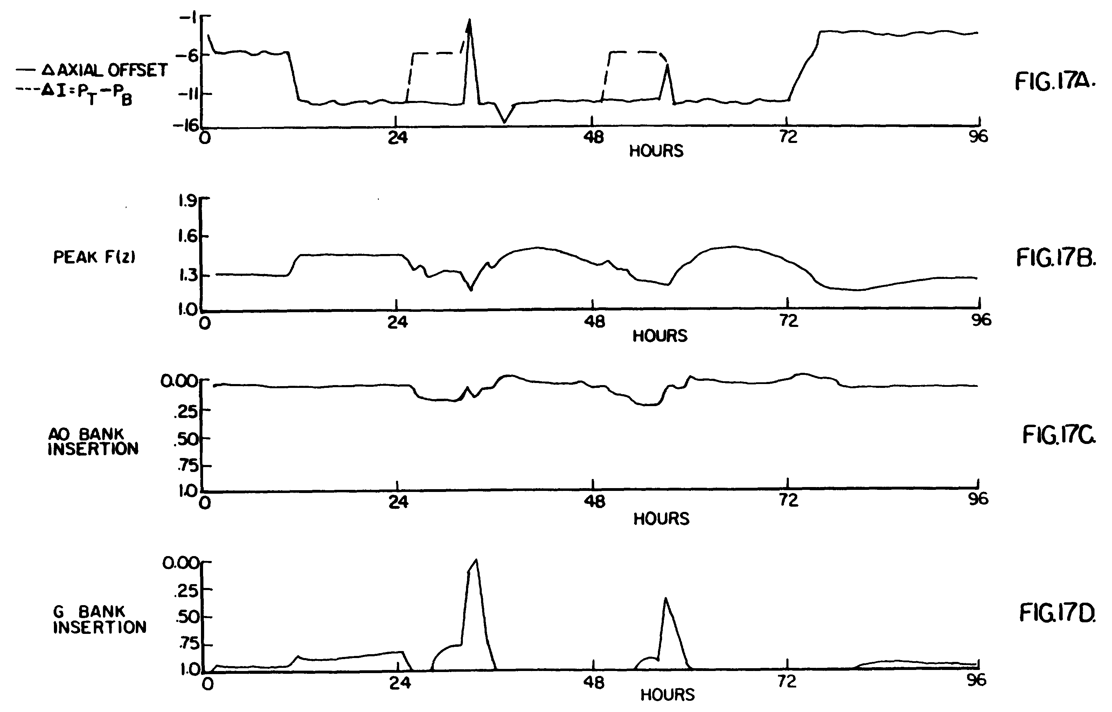

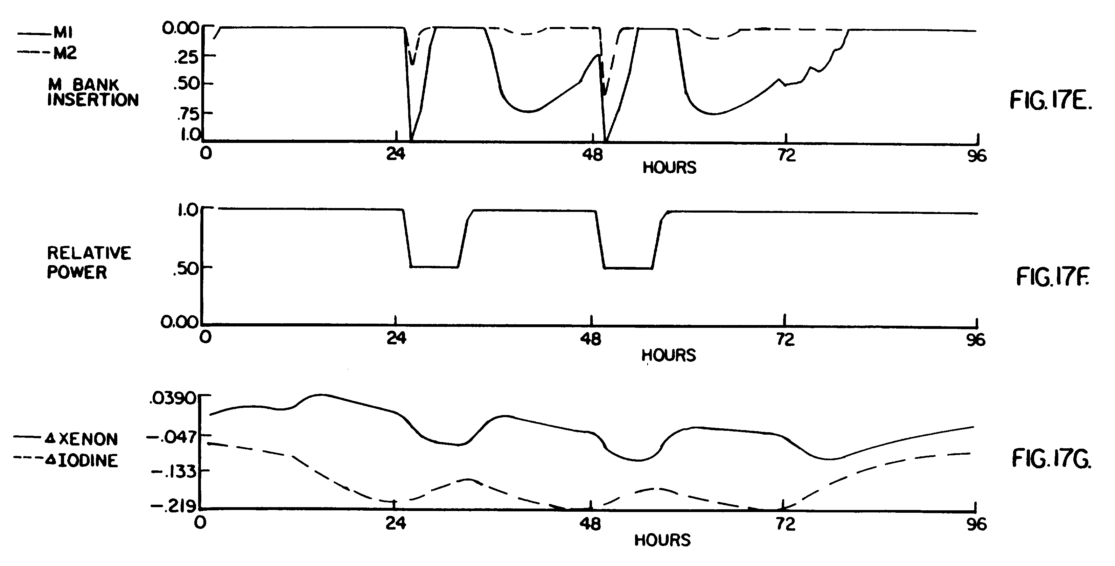

The methods according to the present invention can also be used to provide spinning reserve capacity. If there is reason to expect a need for a quick drop from full power to half power for e.g., 6 hours, with a return to full power as quickly as possible, e.g., in 1 hour, a transition day is preferable used to adjust the axial offset by approximately -12% in two steps with the second step following the first step as soon as possible without raising F(z) above 1.6, e.g., about 4 hours, as illustrated in Fig. 16A, if the return to power is required at the end of life of cycle 1. Use of the method according to the present invention enables F(z) to remain below 1.6 and the axial offset to remain at the target level, except for a short-lived spike during the return to power. A substantially instantaneous increase in power to 90% produces an axial offset 2% or 3% above the target axial offset for base load operation and full power can be restored one hour later without affecting the axial offset significantly. F(z) remains below 1.3 during the positive axial offset spike and thus the response illustrated in Fig. 16 is considered acceptable. As illustrated in Fig. 17, a similar response results if a one hour power changing period is used in changing from full power to half power and from half power to 90% power. In addition, the transition from the base load target axial offset to the target axial offset used during load changes may be made in two steps of approximately 12 hours each.

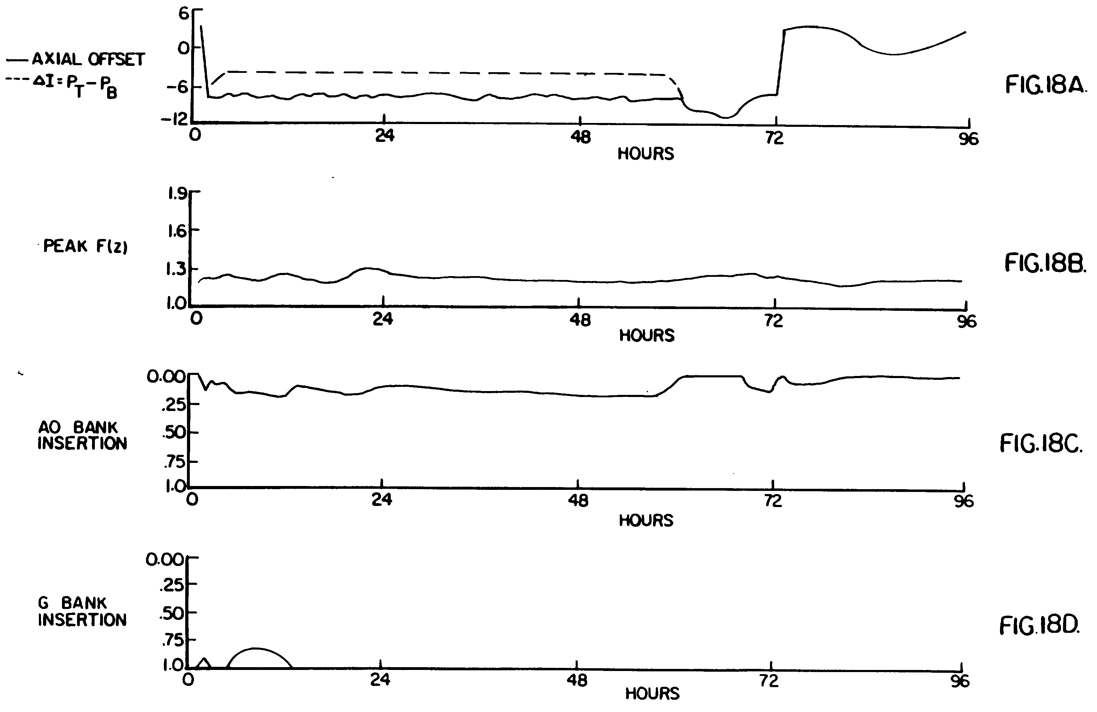

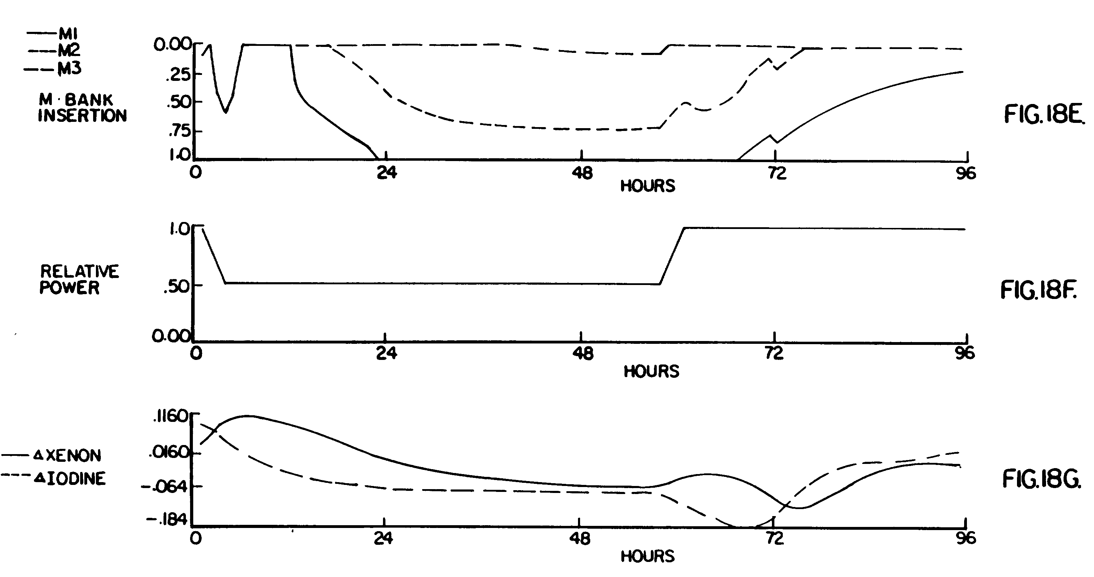

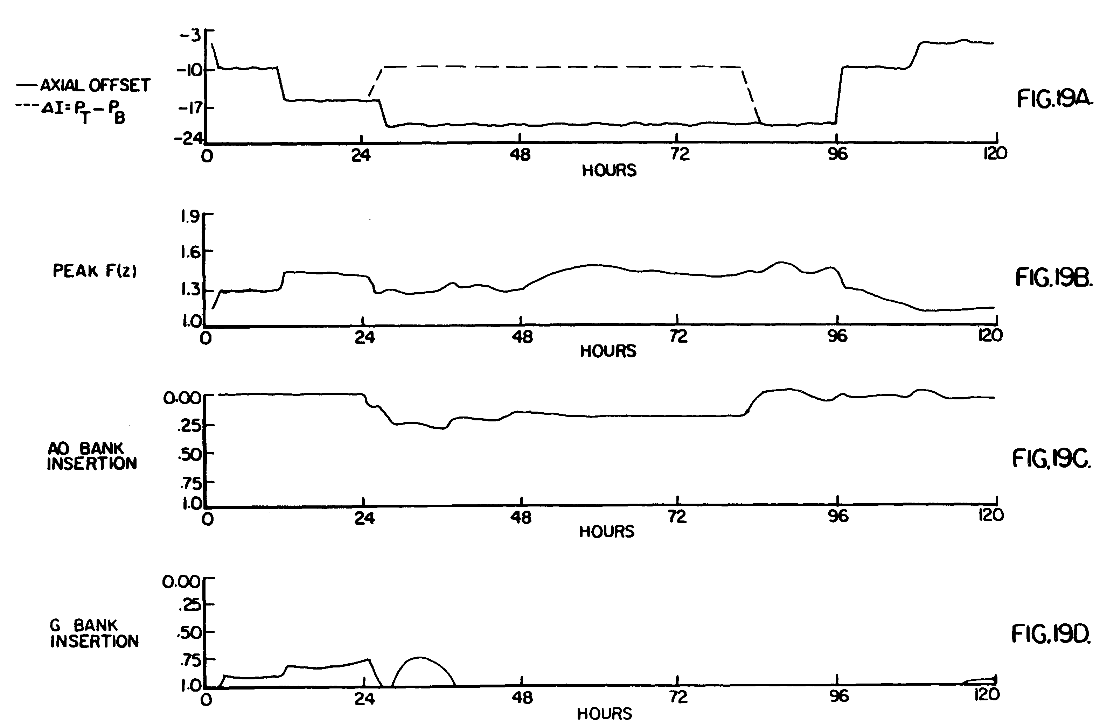

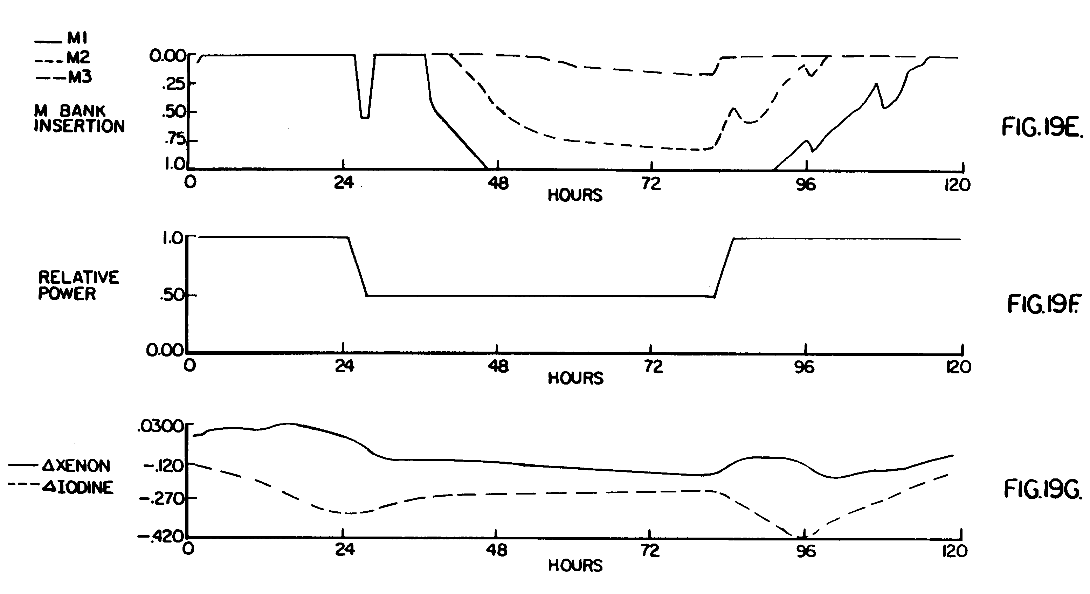

Another pattern of load demand which is common in electrical power grids is continuous low power operation on weekends. A simulation of weekend operation is illustrated in Figs. 18 and 19 for an equilibrium cycle at the beginning of life and end of life, respectively. As illustrated in Figs. 18A-18G, reactor power can be reduced from full power to half power with a change in target axial offset of approximately -10%. The long period of time of half power allows the xenon distribution to reach equilibrium, so that a return to full power during a period of approximately three hours does not significantly affect F(z) and causes a fluctuation in axial offset of only 3% or 4%.

At the end of life of an equilibrium cycle, extended low power operation requires a transition day. In addition, preferably after the approximately -10% adjustment in axial offset during the transition day, an additional approximately -5% adjustment in axial offset is made at the beginning of the extended low power operation of the reactor as illustrated in Fig. 19A. This aids in a smooth return to full power at the end of the weekend. Preferably, the axial offset is initially adjusted by +10% approximately 12 hours after the return to full power in the case of both beginning of life and end of life for an equilibrium cycle, as illustrated in Figs. 18A and 19A. The remaining +5% adjustment in axial offset at the end of life is preferably made approximately 12 hours later, as illustrated in Fig. 19A.

**Claims**

1. A method of operating a nuclear reactor having a core (10) and reactivity control rods (14) for controlling reactivity in the core (10), said method characterized by:

   (a) maintaining a first bank of gray rods (14) fully inserted into the core (10) during steady-state operation for at least ten hours, each of the gray rods (14) having a first neutron absorption worth with substantially constant neutron absorption capability throughout;
   (b) adjusting axial offset downward when a reduction in power demand is expected, using axial offset control rods (14), each having a second neutron absorption worth of at least twice the first neutron absorption worth of each gray rod; and
   (c) adjusting reactivity of the reactor using a second bank of gray rods (14), each having the first neutron absorption worth and reactivity control rods (14), each having a third neutron absorption worth at least twice the first neutron absorption worth.

2. A method as recited in claim 1, wherein said adjusting in step (c) comprises inserting the second bank of gray rods (14) approximately two-thirds into the core (10) prior to inserting any of the reactivity control rods (14) and beginning said inserting of the second bank of gray rods (14) only when the first bank of gray rods (14) is fully inserted into the core (10).

3. A method as recited in claim 1,

wherein the first and second banks of gray rods (14) have approximately equal first and second group neutron absorption worths, and

wherein said method further comprises the step of (d) switching functions of the first and second banks of gray rods (14) from said maintaining in step (a) and said adjusting in step (c) to said adjusting in step (c) and said maintaining in step (a), approximately half way through a fuel cycle.

4. An apparatus for controlling a nuclear reactor having a core (10), characterized by:

a first bank of gray rods (14), each having a first neutron absorption worth substantially constant throughout, said first bank of gray rods (14) being maintained fully inserted into the core (10) during steady-state operation, for increasing reactivity;

a second bank of gray rods (14), each having approximately the first neutron absorption worth, for reducing reactivity of the nuclear reactor;

at least one reactivity control bank of black rods (14), each having a second neutron absorption worth of at least twice the first neutron absorption worth, for reducing reactivity of the nuclear reactor after the second bank of gray rods (14) have been inserted at least half-way into the core (10); and

an axial offset bank of black rods (14), each having a third neutron absorption worth of at least twice the first neutron absorption worth, for adjusting axial offset of power distribution in the core (10) downwards when a reduction in power is expected.

## Patentansprüche

1. Verfahren zum Betrieb eines Kernreaktors mit einem Reaktorkern (10) und Reaktivitätssteuerstäben (14) zur Steuerung der Reaktivität in dem Reaktorkern (10), wobei das Verfahren gekennzeichnet ist durch:

a) Halten einer ersten Anordnung von grauen Stäben (14) im stationären Betrieb während mindestens 10 Stunden vollständig in den Reaktorkern (10) eingefahren, wobei jeder der grauen Stäbe (14) einen ersten Neutronenabsorptionswert bei durchgehend im wesentlichen konstanter Neutronenabsorptionsfähigkeit hat,

b) Verstellen des Axialausgleichs abwärts, wenn eine Verringerung des Leistungsbedarfs erwartet wird, unter Verwendung von Axialausgleichssteuerstäben (14), die jeweils einen zweiten Neutronenabsorptionswert haben, der mindestens das Zweifache des ersten Neutronenabsorptionswerts der grauen Stäbe beträgt, und

c) Einstellen der Reaktivität des Reaktors unter Verwendung einer zweiten Anordnung von grauen Stäben (14), die jeweils den ersten Neutronenabsorptionswert haben, und von Reaktivitätssteuerstäben (14), die jeweils einen dritten Neutronenabsorptionswert haben, der mindestens das Zweifache des ersten Neutronenabsorptionswerts beträgt.

2. Verfahren nach Anspruch 1, wobei die Einstellung nach Schritt c) das Einführen der zweiten Anordnung von grauen Stäben (14) um etwa zwei Drittel in den Reaktorkern (10) umfaßt, bevor die Reaktivitätssteuerstäbe (14) eingefahren werden, und wobei das Einfahren der zweiten Anordnung von grauen Stäben (14) nur beginnt, wenn die erste Anordnung von grauen Stäben (14) vollständig in den Reaktorkern (10) eingefahren sind.

3. Verfahren nach Anspruch 1,

wobei die erste und die zweite Anordnung von grauen Stäben (14) etwa gleiche erste und zweite Gruppeneutronenabsorptionswerte haben, und

wobei das Verfahren weiter als Schritt d) Schaltfunktionen der ersten und der zweiten Anordnung von grauen Stäben (40) aus ihrem Halten im Schritt a) und dem Einstellen im Schritt c) auf das Einstellen im Schritt c) und Halten in Schritt a) nach etwa der Hälfte eines Brennstoffzyklus' umfaßt.

4. Einrichtung zur Steuerung eines Kernreaktors mit einem Reaktorkern (10), gekennzeichnet durch:

eine erste Anordnung von grauen Stäben (14), die jeweils im wesentlichen konstant durchgehend einen ersten Neutronenabsorptionswert haben und die im stationären Betrieb für erhöhte Reaktivität vollständig in den Reaktorkern (10) eingefahren gehalten werden,

eine zweite Anordnung von grauen Stäben (14), die jeweils etwa den ersten Neutronenabsorptionswert zur Verringerung der Reaktivität im Reaktorkern haben,

mindestens eine Reaktivitätssteueranordnung von schwarzen Stäben (14), die jeweils einen zweiten Neutronenabsorptionswert haben, der mindestens das Zweifache des ersten Neutronenabsorptionswerts beträgt, um die Reaktivität des Reaktors zu verringern, nachdem die zweite Anordnung von grauen Stäben (14) mindestens halb in den Reaktorkern (10) eingefahren worden sind, und

eine Axialausgleichsanordnung von schwarzen Stäben (14), die jeweils einen dritten Neutronenabsorptionswert haben, der mindestens das Zweifache des ersten Neutronenabsorptionswerts beträgt, zum Einstellen des Axialausgleichs der Leistungsverteilung im Reaktorkern (10) nach unten, wenn eine Leistungsbedarfsverringerung erwartet wird.

## Revendications

1. Procédé d'exploitation d'un réacteur nucléaire comportant un coeur (10) et des barres (14) de commande de la réactivité qui servent à régler la réactivité dans le coeur (10), ledit procédé étant caractérisé par le fait de :

   (a) maintenir une première grappe de barres grises (14) totalement insérées dans le coeur (10) lors d'un fonctionnement en régime permanent pendant au moins dix heures, chaque barre grise (14) ayant une première valeur d'absorption neutronique avec partout une capacité sensiblement constante d'absorption des neutrons,
   (b) ajuster le décalage axial vers le bas quand une réduction de la demande de puissance est attendue, en utilisant des barres (14) de commande du décalage axial ayant chacune une deuxième valeur d'absorption neutronique au moins le double de la première valeur d'absorption neutronique de chaque barre grise, et
   (c) ajuster la réactivité du réacteur en utilisant une seconde grappe de barres grises (14) ayant chacune la première valeur d'absorption neutronique et des barres (14) de commande de la réactivité ayant chacune une troisième valeur d'absorption neutronique au moins le double de la première valeur d'absorption neutronique.

2. Procédé selon la revendication 1, dans lequel ledit ajustement de l'étape (c) comprend l'insertion d'approximativement les deux tiers de la seconde grappe de barres grises (14) dans le coeur (10) avant l'insertion de l'une quelconque des barres (14) de commande de la réactivité, en ne commençant cette insertion de ladite seconde grappe de barres grises (14) que lorsque la première grappe de barres grises (14) est entièrement insérée dans le coeur (10).

3. Procédé selon la revendication 1, dans lequel les première et seconde grappes de barres grises (14) ont des première et deuxième valeurs d'absorption neutronique de groupe sensiblement égales, et dans lequel ledit procédé comprend en outre l'étape consistant à :
   (d) commuter les fonctions desdites première et seconde grappes de barres grises (14) de l'étape de maintien (a) et de l'étape d'ajustement (c) à l'étape d'ajustement (c) et à l'étape de maintien (a) approximativement à la moitié d'un cycle de combustible.

4. Dispositif de commande d'un réacteur nucléaire comportant un coeur (10), caractérisé par :

   - une première grappe de barres grises (14) ayant chacune une première valeur d'absorption neutronique sensiblement constante partout, les barres grises (14) de ladite première grappe étant maintenues totalement insérées dans le coeur (10) lors d'un fonctionnement en régime permanent pour augmenter la réactivité,
   - une seconde grappe de barres grises (14) ayant chacune à peu près la première valeur d'absorption neutronique et servant à réduire la réactivité du réacteur nucléaire,
   - au moins une grappe de commande de la réactivité faite de barres noires (14), ayant chacune une deuxième valeur d'absorption neutronique au moins le double de la première valeur d'absorption neutronique, servant à réduire la réactivité du réacteur nucléaire après que les barres grises (14) de la seconde grappe ont été insérées au moins de moitié dans le coeur (10), et
   - une grappe de décalage axial, faite de barres noires (14), ayant chacune une troisième valeur d'absorption neutronique au moins le double de la première valeur d'absorption neutronique, servant à ajuster le décalage axial de la répartition de la puissance dans le coeur (10) vers le bas quand on s'attend à une diminution de puissance.

FIG.1.

FIG.2.

FIG.3A.

FIG.3B.

FIG.3C.

FIG.3D.

EP 0 540 951 B1

FIG.3E.

FIG.3F.

FIG.3G.

EP 0 540 951 B1

FIG.4A.

FIG.4B.

FIG.4C.

FIG.4D.

EP 0 540 951 B1

MI
M2
M BANK INSERTION

FIG.4E.

RELATIVE POWER

FIG.4F.

ΔXENON
ΔIODINE

FIG.4G.

HOURS

EP 0 540 951 B1

— AXIAL OFFSET
--- $\Delta I = P_T - P_B$

FIG.5A.

PEAK F(z)

FIG.5B.

AO BANK
INSERTION

FIG.5C.

G BANK
INSERTION

FIG.5D.

EP 0 540 951 B1

FIG.5E.

FIG.5F.

FIG.5G.

EP 0 540 951 B1

—— M1
- - - M2

M BANK
INSERTION

0.00
.25
.50
.75
1.0

0    24    48    72    96
HOURS

RELATIVE
POWER

1.0

.50

0.00

0    24    48    72    96
HOURS

.0500
-.032
-.126
-.214

—— Δ XENON
- - - Δ IODINE

0    24    48    72    96
HOURS

EP 0 540 951 B1

—AXIAL OFFSET
---- $\Delta I = P_T - P_B$

FIG.6A.

PEAK F(z)

FIG.6B.

AO BANK
INSERTION

FIG.6C.

G BANK
INSERTION

FIG.6D.

FIG.6E.

FIG.6F.

FIG.6G.

AXIAL OFFSET
ΔI = P_T − P_B

FIG.7A.

PEAK F(z)

FIG.7B.

AO BANK
INSERTION

FIG.7C.

G BANK
INSERTION

FIG.7D.

HOURS

EP 0 540 951 B1

FIG.7E.

FIG.7F.

FIG.7G.

MI
M2
M BANK
INSERTION

RELATIVE
POWER

ΔXENON
ΔIODINE

EP 0 540 951 B1

AXIAL OFFSET
△ I = $P_T - P_B$

FIG.8A.

PEAK F(z)

FIG.8B.

AO BANK INSERTION

FIG.8C.

G BANK INSERTION

FIG.8D.

HOURS

EP 0 540 951 B1

EP 0 540 951 B1

— MI
--- M2

M BANK
INSERTION

0.00
.25
.50
.75
1.0
0          24          48          72
HOURS

FIG.8E.

RELATIVE
POWER

1.0
.50
0.00
0          24          48          72
HOURS

FIG.8F.

— Δ XENON
--- Δ IODINE

.0500
-.090
-.230
-.370
0          24          48          72
HOURS

FIG.8G.

—AXIAL OFFSET
---$\Delta I = P_T - P_B$

FIG.9A.

PEAK F(z)

FIG.9B.

AO BANK
INSERTION

FIG.9C.

G BANK
INSERTION

FIG.9D.

EP 0 540 951 B1

FIG.9E.

FIG.9F.

FIG.9G.

EP 0 540 951 B1

—Δ AXIAL OFFSET
---Δ I = $P_T$ - $P_B$

FIG.IOA.

PEAK F(Z)

FIG.IOB.

AO BANK
INSERTION

FIG.IOC.

G BANK
INSERTION

FIG.IOD.

EP 0 540 951 B1

—— MI
---- M2

M BANK
INSERTION

FIG.IOE.

RELATIVE
POWER

FIG.IOF.

—— ΔXENON
--- ΔIODINE

FIG.IOG.

FIG.IIA.

FIG.IIB.

FIG.IIC.

FIG.IID.

EP 0 540 951 B1

FIG.IIE.

FIG.IIF.

FIG.IIG.

EP 0 540 951 B1

FIG.12A.

FIG.12B.

FIG.12C.

FIG.12D.

EP 0 540 951 B1

FIG.12E.

FIG.12F.

FIG.12G.

EP 0 540 951 B1

32

—AXIAL OFFSET
---$\Delta I = P_T - P_B$

FIG. 13A.

6
−1
−8
−15

0          24          48          72
HOURS

PEAK F(z)

1.9
1.6
1.3
1.0

0          24          48          72
HOURS

FIG.13B.

AO BANK
INSERTION

0.00
.25
.50
.75
1.0

0          24          48          72
HOURS

FIG.13C.

G BANK
INSERTION

0.00
.25
.50
.75
1.0

0          24          48          72
HOURS

FIG.13D.

EP 0 540 951 B1

FIG.13E.

FIG.13F.

FIG.13G.

34

FIG.14A.

FIG.14B.

FIG.14C.

FIG.14D.

EP 0 540 951 B1

FIG.14E.

FIG.14F.

FIG.14G.

EP 0 540 951 B1

—AXIAL OFFSET
---ΔI = $P_T - P_B$

FIG.15A.

PEAK F(z)

FIG.15B.

AO BANK
INSERTION

FIG.15C.

G BANK
INSERTION

FIG.15D.

FIG.15E.

FIG.15F.

FIG.15G.

EP 0 540 951 B1

38

FIG.16A.

FIG.16B.

FIG.16C.

FIG.16D

— AXIAL OFFSET

--- $\Delta I : P_T - P_B$

PEAK F(z)

AO BANK INSERTION

G BANK INSERTION

—— MI
---- M2

M BANK
INSERTION

FIG.16E.

—— ΔXENON
---- ΔIODINE

RELATIVE
POWER

FIG.16F.

FIG.16G.

HOURS

FIG.17A.

— △ AXIAL OFFSET
---△I=P$_T$-P$_B$

PEAK F(z)

FIG.17B.

AO BANK
INSERTION

FIG.17C.

G BANK
INSERTION

FIG.17D.

EP 0 540 951 B1

FIG.17E.

FIG.17F.

FIG.17G.

EP 0 540 951 B1

FIG.18A.

FIG.18B.

FIG.18C.

FIG.18D.

EP 0 540 951 B1

FIG.18E.

FIG.18F.

FIG.18G.

44

FIG.19A.

FIG.19B.

FIG.19C.

FIG.19D.

EP 0 540 951 B1

FIG.19E.

FIG.19F.

FIG.19G.

46